# EUROPEAN PATENT SPECIFICATION

(11) **EP 2 854 375 B1**
(45) Date of publication and mention of the grant of the patent: **14.03.2018**
(21) Application number: 13860025.9
(22) Date of filing: 25.11.2013
(51) Int. Cl.: H04L 29/08, H04L 12/24, H04L 12/58, H04W 4/08

(54) **COMMUNICATION PROCESSING METHOD, SERVER AND TERMINAL**
KOMMUNIKATIONSVERARBEITUNGSVERFAHREN, SERVER UND ENDGERÄT
PROCÉDÉ DE TRAITEMENT DE COMMUNICATION, SERVEUR ET TERMINAL

(30) Priority: 03.12.2012 CN 201210508630
(43) Date of publication of application: 01.04.2015
(73) Proprietor: Huawei Device Co., Ltd., Longgang District Shenzhen Guangdong 518129 (CN)
(72) Inventor: ZHAO, Junjie, Shenzhen Guangdong 518129 (CN); ZHU, Yu, Shenzhen Guangdong 518129 (CN); ZHANG, Qinliang, Shenzhen Guangdong 518129 (CN)
(74) Representative: Gill Jennings & Every LLP
(86) International application number: PCT/CN2013/087747
(87) International publication number: WO 2014/086236

(56) References cited:
- CN-A- 101 646 132
- CN-A- 102 036 181
- CN-A- 102 711 037
- US-A1- 2009 248 797
- US-A1- 2011 252 337
- US-A1- 2012 297 075
- PETER SAINT-ANDRE: "XEP-0045: Multi-User Chat", INTERNET CITATION, 16 July 2008 (2008-07-16), pages 1-126, XP002631740, Retrieved from the Internet: URL:http://xmpp.org/extensions/xep-0045.ht ml [retrieved on 2011-04-06]
- RONNY KLAUCK ET AL: "Chatty things - Making the Internet of Things readily usable for the masses with XMPP", COLLABORATIVE COMPUTING: NETWORKING, APPLICATIONS AND WORKSHARING (COLLABORATECOM), 2012 8TH INTERNATIONAL CONFERENCE ON, IEEE, 14 October 2012 (2012-10-14), pages 60-69, XP032325748, ISBN: 978-1-4673-2740-4

## Description

### TECHNICAL FIELD

Embodiments of the present invention relate to the communications field, and in particular, to a communication processing method, a server and a terminal.

### BACKGROUND

The Broadband Forum (Broadband Forum, BBF for short) defines a TR-069 remote management protocol, so that an Auto-Configuration Server (Auto-Configuration Server, ACS for short) can remotely manage a customer premises equipment (Customer Premises Equipment, CPE for short), where the CPE may be a gateway (Gateway) and another device under the gateway, such as a set top box and a VoIP telephone.

XMPP (Extensible Messaging and Presence Protocol, Extensible Messaging and Presence Protocol) is a communications protocol based on XML (Extensible Markup Language, Extensible Markup Language), and is widely applied in the instant messaging field. The XMPP protocol mainly includes two entities: an XMPP client and an XMPP server. A communication message between XMPP clients needs to be forwarded by the XMPP server. The ACS and the CPE may be used as XMPP clients, and a communication message sent by the ACS may be forwarded to the CPE by the XMPP server.

As the number of CPEs increases day by day, the ACS needs to manage multiple CPEs. When the ACS needs to manage multiple CPEs at the same time, the ACS sends, to the XMPP server, multiple communication messages that are intended for each CPE, which thereby increases network load of the ACS and the XMPP server.

US2012/0297075 discloses a device interconnection and service discovery via a communication cloud. US 2009/0248797 discloses a server apparatus including a registration means for associating a first apparatus with a plurality of second apparatuses as control targets thereof. PETER SAINT-ANDRE: "XEP-0045: Multi-User Chat", INTERNET CITATION, 16 July 2008 (2008-07-16), pages 1-126, XP002631740, discloses a XMPP protocol extension for ulti-user text chat. RONNY KLAUCK ET AL: "Chatty things- Making the Internet of Things readily usable for the masses with XMPP", COLLABORATIVE COMPUTING: NETWORKING, APPLICATIONS AND WORKSHARING (COLLABORATECOM), 2012 8TH INTERNATIONAL CONFERENCE ON, IEEE, 14 October 2012 (2012-10-14), pages 60-69, XP032325748, ISBN: 978-1-4673-27 40-4, discloses an XMPP-based service provisioning sublayer for the IoT to integrate resource constrained devices seamlessly into the Internet.

### Summary

The invention is defined by methods according to independent claims 1 and 4 and by a management server and a terminal according to independent claims 7 and 8. Further embodiments are defined by the dependent claims. When the management server communicates with multiple terminals, the management server does not need to send multiple communication requests to the XMPP server, but only needs to send one communication request carrying a group identifier to the XMPP server, so as to be capable of communicating with the multiple terminals, thereby reducing network load on the management server and the XMPP server.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a communication processing method according to an embodiment of the present invention;
FIG. 2 is another flowchart of a communication processing method according to an embodiment of the present invention;
FIG. 3 is another flowchart of a communication processing method according to an embodiment of the present invention;
FIG. 4 is a signaling diagram of a communication processing method according to an embodiment of the present invention;
FIG. 5 is another signaling diagram of a communication processing method according to an embodiment of the present invention;
FIG. 6 is another signaling diagram of a communication processing method according to an embodiment of the present invention;
FIG. 7 is a schematic structural diagram of a terminal according to an embodiment of the present invention;
FIG. 8 is a schematic structural diagram of a management server according to an embodiment of the present invention;
FIG. 9 is a schematic structural diagram of an XMPP server according to a non-claimed example;
FIG. 10 is another schematic structural diagram of a terminal according to an embodiment of the present invention;
FIG. 11 is another schematic structural diagram of a management server according to an embodiment of the present invention;
FIG. 12 is another schematic structural diagram of an XMPP server according to a non-claimed example;
FIG. 13 is another schematic structural diagram of a terminal according to an embodiment of the present invention;
FIG. 14 is another schematic structural diagram of a management server according to an embodiment of the present invention; and
FIG. 15 is another schematic structural diagram of an XMPP server according to a non-claimed example.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention.

Ordinal numbers such as "first", "second" mentioned in the embodiments of the present invention should be considered only for distinguishing unless they really represent order according to the context.

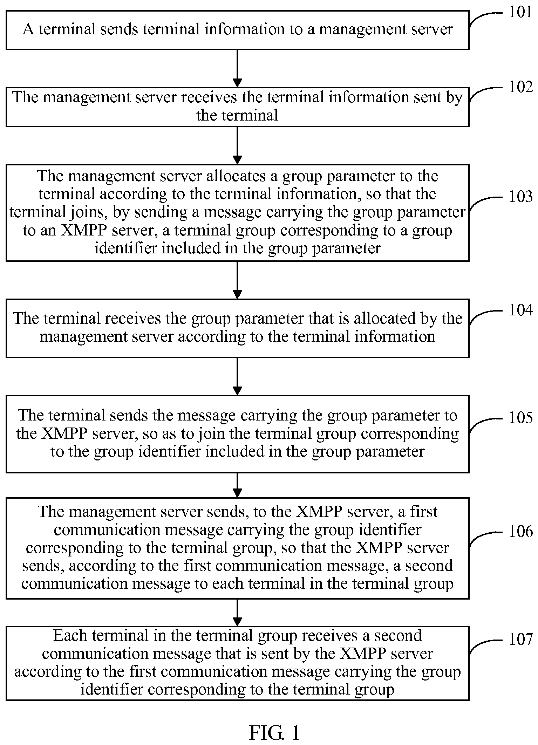

FIG. 1 is a flowchart of a communication processing method according to an embodiment of the present invention, and as shown in FIG. 1, the method includes:
Step 101. A terminal sends terminal information to a management server.

The communication processing method provided by this embodiment of the present invention may be a method for the management server to communicate with one or more terminals. The management server, for example, may be an Auto-Configuration Server (Auto-Configuration Server, ACS for short) or an OMA-DM server (Open Mobile Alliance, Open Mobile Alliance, OMA for short, device management, Device Management, DM for short). The terminal, for example, may be a customer premises equipment (Customer Premises Equipment, CPE for short) or an OMA-DM gateway, and the CPE, for example, may be a gateway (Gateway) or another device under the gateway, where the another device under the gateway is, for example, a set top box or a VoIP (Voice over Internet Protocol) telephone, where VoIP is that an analog voice signal is digitized and is transmitted in a data packet (Data Packet) form over an IP data network (IP Network) in real time.

The terminal sends terminal information of the terminal to the management server, where the terminal information may at least include any one or more of the following items: a product class (ProductClass), device location information (Location), a serial number (SerialNumber), a hardware version (FirmwareVersion), a software version (SoftwareVersion), and a device vendor identifier (OUI, organizationally unique identifier, organizationally unique identifier). Specific content included in the terminal information may be determined by an application environment, for example, in an application environment, it may be preset which of the foregoing items are included in the terminal information.

Step 102. The management server receives the terminal information sent by the terminal.

The management server may obtain the terminal information of the terminal. If multiple terminals send terminal information to the management server, the management server may obtain respective terminal information of the multiple terminals.

Step 103. The management server allocates a group parameter to the terminal according to the terminal information, so that the terminal joins, by sending a message carrying the group parameter to an XMPP server, a terminal group corresponding to a group identifier included in the group parameter, that is, the group parameter includes the group identifier.

In this embodiment, the management server may create multiple terminal groups, and each terminal group may be used to include one type of terminal, and therefore the management server may allocate a terminal to a corresponding terminal group according to terminal information of the terminal; and after the management server allocates the group parameter to the terminal, the terminal may send the message carrying the group parameter to the XMPP server, so that the terminal may join a terminal group corresponding to the group identifier in the group parameter.

Step 104. The terminal receives the group parameter that is allocated by the management server to the terminal according to the terminal information.

The management server allocates a group parameter to each terminal, the allocated group parameter may be directly sent by the management server to each terminal, and may also be sent by the management server to each terminal through the XMPP server, and may further be input to each terminal in another manner, for example, a user inputs the group parameter to the terminal.

Step 105. The terminal sends the message carrying the group parameter to the XMPP server, so as to join the terminal group corresponding to the group identifier included in the group parameter.

After each terminal sends a presence message carrying the group parameter to the XMPP server, the XMPP server may add the terminal to a corresponding terminal group, where the group parameter includes at least the group identifier.

It should be noted that the terminal group may be created in advance by the XMPP server according to an instruction of the management server.

Step 106. The management server sends, to the XMPP server, a first communication message carrying the group identifier corresponding to the terminal group, so that the XMPP server sends, according to the first communication message, a second communication message to each terminal in the terminal group.

When the management server needs to send a communication message to multiple terminals in a same terminal group, the management server may send the first communication message carrying the group identifier of the terminal group to the XMPP server; and after receiving the first communication message, the XMPP server may send the second communication message to each terminal in the terminal group. A destination address of the first communication message is an address of the XMPP server; the XMPP server sends multiple second communication messages, that is the XMPP server sends one second communication message to each terminal, and a destination address of a second communication message sent to a terminal is an address of the terminal; and message bodies of the first communication message and the second communication message are the same.

It should be noted that, step 101 to step 105 are steps that are performed when the management server receives terminal information of one terminal, and if the management server receives terminal information of multiple terminals, step 101 to step 105 are performed between the management server and each terminal. For a terminal, if a group parameter has been allocated by the management server and a corresponding terminal group has been joined, the management server can subsequently send multiple first communication messages through the XMPP server; and before the management server sends the first first communication message through the XMPP server, step 101 to step 105 need to be performed; but when the management server send a second, a third, or more first communication messages through the XMPP server, step 101 to step 105 may not be performed.

In addition, the foregoing step 101 to step 105 may also not be a condition for triggering step 106. That is to say, step 101 to step 105 are descriptions about how the management server enables a terminal to join a terminal group, and a purpose of enabling a terminal to join a terminal group is to be capable of implementing step 106, whereas in a specific implementation process, step 106 may be not necessarily triggered after step 105, and execution of step 106 may be determined by the management server: when the management server has a communication message that needs to be sent to each terminal in the terminal group, step 106 may be performed.

Step 107. Each terminal in the terminal group receives a second communication message that is sent by the XMPP server according to the first communication message carrying the group identifier corresponding to the terminal group, where the first communication message is received by the XMPP server from the management server.

Each terminal may receive the second communication message sent by the XMPP server. After receiving the second communication message, the terminal may perform a corresponding operation according to content of the second communication message. For example, the second communication message may include a connection request or may include an operation command; when the second communication message includes the connection request, the terminal may send a management session establishment request to the management server according to the second communication message, after the receiving the management session establishment request sent by the terminal, the management server returns a management session establishment response to the terminal, and at this moment, a management session between the terminal and the management server is established; and when the second communication message includes the operation command, the terminal may also executes, after receiving the second communication message, the operation command in the second communication message and returns a response to the management server.

According to this embodiment of the present invention, a management server allocates a group parameter to a terminal according to terminal information sent by the terminal; the terminal joins, according to the group parameter and through an XMPP server, a terminal group corresponding to the group parameter; and after the terminal joins the terminal group, when the management server needs to communicate with each terminal in the terminal group, the management server may send, to the XMPP server, a communication message carrying a group identifier of the terminal group, so that the XMPP server forwards the communication message to each terminal in the terminal group. Therefore, when the management server communicates with multiple terminals, the management server does not need to send multiple communication requests to the XMPP server, but only needs to send one communication request carrying a group identifier to the XMPP server, so as to be capable of communicating with the multiple terminals, thereby reducing network load on the management server and the XMPP server.

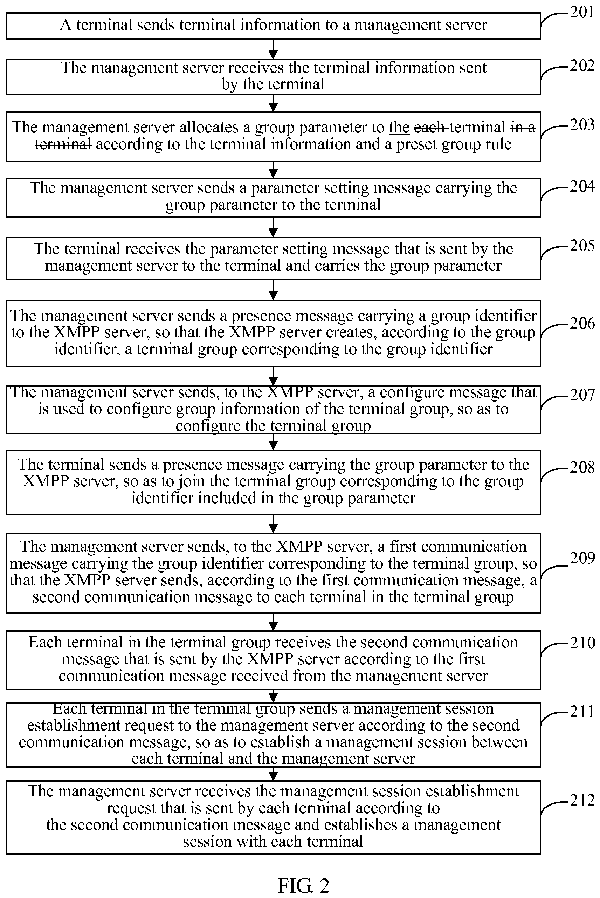

FIG. 2 is another flowchart of a communication processing method according to an embodiment of the present invention, and on the basis of the embodiment shown in FIG. 1, as shown in FIG. 2, the method includes:
Step 201. A terminal sends terminal information to a management server.

When the terminal is connected to the management server for the first time or is restored to factory settings, the terminal may send the terminal information to the management server. For details, refer to the description in step 101 in the embodiment shown in FIG. 1.

Step 202. The management server receives the terminal information sent by the terminal.

Step 203. The management server allocates a group parameter to the terminal according to the terminal information and a preset group rule.

When the management server allocates the group parameter to each terminal, specifically, the group parameter may be allocated to the terminal according to the terminal information and the preset group rule. The group rule may include any one or more of the following items: a product class, device location information, a serial number, a hardware version, a software version, and a device vendor identifier. It should be noted that, when a group rule is preset, the group rule is determined according to content included in terminal information in a specific application environment, and content included in the group rule needs to be included in the terminal information; for example, if, in a specific application environment, terminal information includes the following four items: a product class, device location information, a serial number, and a hardware version, the group rule may include any one or more of the four items.

The management server may allocate a terminal whose terminal information matches a group rule to a terminal group corresponding to the group rule and allocate a group parameter of the terminal group to the terminal. For example, a group rule of terminal group X is that: a product class is X; the management server searches terminal information of a terminal for the product class, and allocates a terminal whose product class is X to terminal group X, and allocates a group parameter of terminal group X to the terminal.

The group parameter includes at least a group identifier, and the group identifier is used to uniquely identify a terminal group. The group parameter may further include any one or more of the following items: a second group password, a group username, a group connection username and a group connection password. A terminal may join a terminal group according to the group identifier, the second group password, and the group username, and the terminal may use the group connection username and the group connection password for verification when connecting to the management server.

Step 204. The management server sends a parameter setting message carrying the group parameter to the terminal.

After allocating the group parameter to the terminal, the management server may send the group parameter to the terminal, and specifically, the management server may send the group parameter to the terminal by using the parameter setting message.

Step 205. The terminal receives the parameter setting message that is sent by the management server and carries the group parameter.

In step 204 and step 205, the group parameter is directly sent by the management server to the terminal. In another implementation manner, the group parameter may also be sent by the management server to the terminal through an XMPP server, and in this case, the foregoing step 204 and step 205 may be replaced by step 204' and step 205'.

Step 204'. The management server sends, to an XMPP server, an invite message carrying the group parameter and a terminal device identifier of the terminal, so that the XMPP server sends the group parameter to the terminal.

After the management server sends the invite message carrying the group parameter and the terminal device identifier of the terminal to the XMPP server, the XMPP server sends an invite message carrying the group parameter to the terminal according to the terminal device identifier.

Step 205'. The terminal receives the invite message that is sent by the XMPP server and carries the group parameter.

Step 206. The management server sends a presence (presence) message carrying a group identifier to the XMPP server, so that the XMPP server creates, according to the group identifier, a terminal group corresponding to the group identifier.

After the management server sends the presence message carrying the group identifier to the XMPP server, the XMPP server may create a corresponding terminal group according to the group identifier, where the presence message may also be a message of another type.

Step 207. The management server sends a configure message that is used to configure group information of the terminal group to the XMPP server, so as to configure the terminal group.

The group information may include any one or more of the following items: a group class, group permission, and a first group password, where the group class is used to represent a communication manner of a terminal in the terminal group, the group permission is used represent a permission requirement of a terminal in the terminal group, and the first group password is used to represent a password required when a terminal joins the terminal group.

This embodiment does not limit the order for performing step 206 and step 207 among the foregoing steps, for example, step 206 and step 207 may be performed before or after any step of step 201 to step 205.

Step 208. The terminal sends a presence message carrying the group parameter to the XMPP server, so as to join the terminal group corresponding to the group identifier included in the group parameter.

The management server instructs the XMPP server to create the terminal group and after the management server allocates the group parameter to the terminal, the terminal may join the terminal group by sending the presence message carrying the group parameter to the XMPP server, where the presence message may also be a message of another type.

Step 209. The management server sends a first communication message carrying the group identifier corresponding to the terminal group to the XMPP server, so that the XMPP server sends, according to the first communication message, a second communication message to each terminal in the terminal group. For details of this step, reference may be made to the description in step 106 in the embodiment shown in FIG. 1.

Step 210. Each terminal in the terminal group receives the second communication message that is sent by the XMPP server according to the first communication message received from the management server.

It should be noted that the management server may manage multiple terminals by using the second communication message, and may also instruct, by using the second communication message, multiple terminals to perform a corresponding operation.

In a specific implementation manner, if the second communication message includes a connection request, that is, the second communication message is a connection request message, the following step 211 and step 212 are performed after step 210.

Step 211. Each terminal in the terminal group sends a management session establishment request to the management server according to the second communication message, so as to establish a management session between each terminal and the management.

Step 212. The management server receives the management session establishment request that is sent by each terminal according to the second communication message, and establishes a management session with each terminal.

After the management server receives the management session establishment request sent by the terminal, the management server returns a management session establishment response to the terminal, and at this moment the management session is established, and it is implemented that the management server manages multiple terminals by using the communication message. After the management server establishes the management session with multiple terminals, the management server may send an operation command to each terminal directly rather than through the XMPP server to enable the terminal to perform a corresponding operation.

In another specific implementation manner, the second communication message may further be a message of another type, for example, the second communication message may include an operation command, such as a command for setting a parameter value (SetParameterValue), a command for acquiring a parameter value, and a command for setting a parameter attribute.

When the second communication message includes an operation command, after the foregoing step 210, the following step may be performed: the terminal performs the operation command in the second communication message and returns a response message to the management server, which implements that the management server instructs, by using the second communication message, multiple terminals to perform a corresponding operation.

According to this embodiment of the present invention, a management server allocates a group parameter to a terminal according to a terminal rule and terminal information that is sent by the terminal; the terminal joins, according to the group parameter and through an XMPP server, a terminal group corresponding to the group parameter; and after the terminal joins the terminal group, when the management server needs to send a communication message to each terminal in the terminal group, the management server may send a communication message carrying a group identifier of the terminal group to the XMPP server, so that the XMPP server forwards the communication message to each terminal in the terminal group. Therefore, when the management server communicates with multiple terminals, the management server does not need to send multiple communication requests to the XMPP server, but only needs to send one communication request carrying a group identifier to the XMPP server, so as to be capable of communicating with the multiple terminals, thereby reducing network load on the management server and the XMPP server.

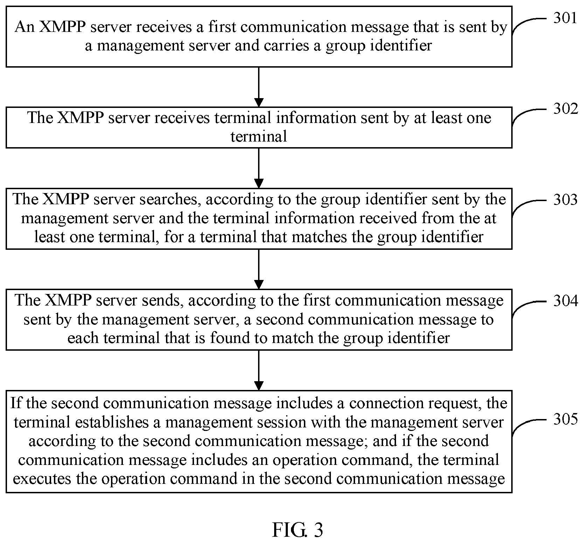

FIG. 3 is another flowchart of a communication processing method according to an embodiment of the present invention, and as shown in FIG. 3, the method includes:
Step 301. An XMPP server receives a first communication message that is sent by a management server and carries a group identifier.

The communication processing method provided by this embodiment of the present invention is a method for a management server to communicate with one or more terminals. The management server, for example, may be an ACS. The terminal, for example, may be a CPE, and the CPE, for example, may be a gateway (Gateway) and another device under the gateway, and the another device under the gateway is, for example, a set top box or a VoIP telephone.

The group identifier may include any one or more of the following items: a product class, device location information, a serial number, a hardware version, a software version, and a device vendor identifier. The management server may preset a group identifier according to a requirement, for example, if the management server needs to communicate with a terminal of a product class, the product class may be used as the group identifier. The management server sends the first communication message carrying the group identifier to the XMPP server.

Step 302. The XMPP server receives terminal information sent by at least one terminal.

When one or more terminals establish a connection with the XMPP server, the XMPP server may receive terminal information sent by each terminal, where, the terminal information may include but is not limited to any one or more of the following items: a product class, device location information, a serial number, a hardware version, a software version, and a device vendor identifier, and specific content included in the terminal information may be determined by an application environment.

It should be noted that, when the management server presets the group identifier according to a requirement, the group identifier may further be determined according to content included in terminal information in a specific application environment, and content included in the group identifier needs to be included in the terminal information; and for example, if in a specific application environment, terminal information includes the following four items: a product class, device location information, a serial number, and a hardware version, the group identifier may include any one or more of the four items.

The order of step 301 and step 302 is not limited in this embodiment.

Step 303. The XMPP server searches, according to the group identifier sent by the management server and the terminal information received from at least one terminal, for a terminal that matches the group identifier.

Specifically, the terminal that matches the group identifier is that: terminal information of the terminal includes content that is the same as the group identifier. For example, if the group identifier includes a product class X1 and device location information X2, the XMPP server searches for terminal information of a terminal that currently has established a connection with the XMPP server; and if terminal information of a terminal includes the product class X1 and the device location information X2, the terminal is the terminal that matches the group identifier.

The XMPP server searches all terminals that have established a connection with the XMPP server for all terminals that match the group identifier.

Step 304. The XMPP server sends, according to the first communication message sent by the management server, a second communication message to each terminal that is found to match the group identifier.

The XMPP server may send the second communication message to all terminals that are found and match the group identifier. A destination address of the first communication message is an address of the XMPP server, a destination address of the second communication message is an address of each terminal, and message bodies of the first communication message and the second communication message are the same.

Further, the method may further include:
Step 305. If the second communication message includes a connection request, the terminal establishes a management session with the management server according to the second communication message; and if the second communication message includes an operation command, the terminal executes the operation command in the second communication message.

After receiving the second communication message, the terminal may perform a corresponding operation according to a type of the second communication message. For example, when the second communication message includes a connection request, the terminal may send a management session establishment request to the management server, and the management server receives the management session establishment request and establishes a management session to the terminal; or when the second communication message includes an operation command, the terminal may execute the operation command in the second communication message.

According to this embodiment of the present invention, when a management server needs to communicate with a type of terminal, the management server may send, to an XMPP server, a communication message carrying a group identifier corresponding to this type of terminal, the XMPP server may find, according to the group identifier, multiple terminals that match the group identifier, and then the XMPP server separately sends a communication message to the multiple terminals found, thereby implementing communication between the management server and multiple terminals of a type. Therefore, when the management server establishes communication with multiple terminals, the management server does not need to send multiple communication requests to the XMPP server, but only needs to send one communication request carrying a group identifier to the XMPP server, so as to be capable of establishing communication with the multiple terminals, thereby reducing network load on the management server and the XMPP server.

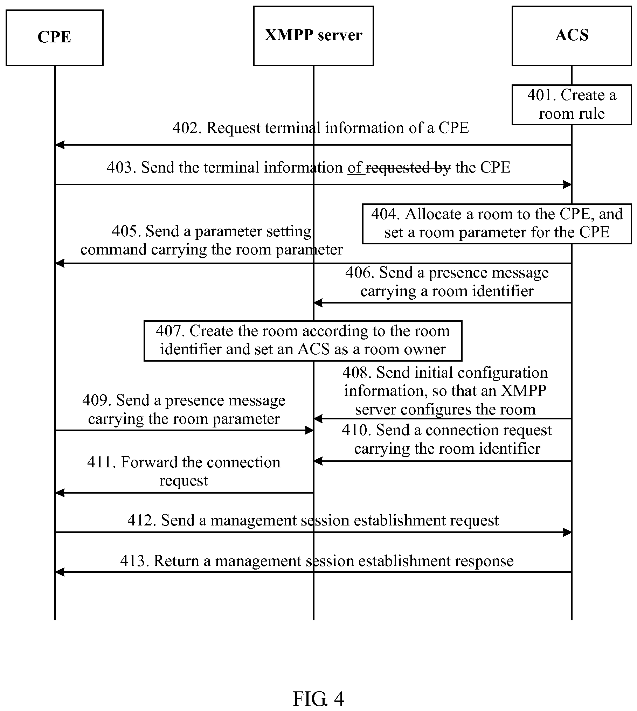

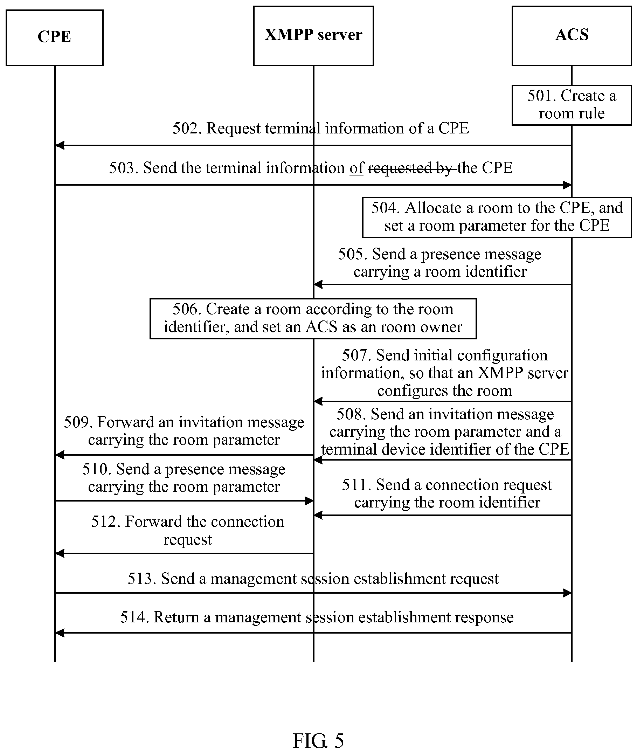

Each embodiment of the present invention may be based on multiple protocols, for example may be based on an extended XMPP protocol-XEP-0045 (Multi-User Chat, multi-user chat); and the management server, for example, may be an ACS or an OMA-DM server, and the terminal, for example, may be a CPE or an OMA-DM gateway. XMPP is a communications protocol based on XML and is widely applied in the instant messaging field. The XMPP protocol mainly includes two entities: an XMPP client and an XMPP server, and forwarding needs to be performed through an XMPP server for communication between XMPP clients. In each embodiment of the present invention, the management server and the terminal may be used as XMPP clients, and a communication request sent by the management server is forwarded to the terminal through the XMPP server. The following makes detailed descriptions by using the embodiments shown in FIG. 4 and FIG. 5. In the embodiments shown in FIG. 4 and FIG. 5, an ACS and a CPE are used as examples for description.

FIG. 4 is a signaling diagram of a communication processing method according to an embodiment of the present invention, and based on the embodiments shown in FIG. 1 and FIG. 2, as shown in FIG. 4, the method includes:
Step 401. An ACS creates a room rule.

In an extended XMPP protocol-XEP-0045, multiple users may exchange information by using a room.

The room and room rule in this embodiment are respectively equivalent to a terminal group and a group rule in the embodiments shown in FIG. 1 and FIG. 2. The ACS may create one or more room rules, and the room rules may include, for example, any one or more elements of the following: a product class (ProductClass), device location information (Location), a serial number (SerialNumber), a hardware version (FirmwareVersion), a software version (SoftwareVersion), and an organizationally unique identifier (OUI, organizationally unique identifier), where the product class is used to represent a device type, the device location information is used to identify a location in which a device is located, and the OUI is a device vendor identifier and is used to represent a device vender.

When the room rule includes one or more elements, it indicates that a terminal having these elements is added to a room corresponding to the room rule, and generally one room rule corresponds to one room.

Step 402. The ACS sends, to a CPE, a message that is used to request terminal information of the CPE.

When the CPE is connected to the ACS for the first time or the CPE is restored to factory settings, the CPE sends a connection message to the ACS to establish a connection between the CPE and the ACS, and at this moment the ACS may acquire the terminal information of the CPE. When multiple CPEs send connection messages to the ACS, the ACS may request terminal information from each CPE.

The ACS may acquire, according to an application environment, terminal information of the CPE in the application environment, or the ACS may request acquiring corresponding terminal information of the CPE according to the elements of the room rule. For example, if the room rule includes a serial number and a hardware version, the ACS may request acquiring the serial number and the hardware version of the CPE from the CPE.

Step 403. The CPE sends the terminal information of the CPE to the ACS.

It should be noted that the order of step 401 and step 402 is not limited in this embodiment. That is, in another implementation manner, the ACS may first acquire the terminal information of the CPE and then create the room rule.

Step 404. The ACS allocates a room to the CPE according to the room rule and the terminal information of the CPE, and sets a room parameter for the CPE.

The room parameter is equivalent to a group parameter in the embodiments shown in FIG. 1 and FIG. 2.

The ACS compares the terminal information of the CPE with the room rule, and allocates a room corresponding to the room rule to a CPE that conforms to a room rule. The ACS needs to set the room parameter for the CPE to enable the CPE to be capable of subsequently joining the corresponding room.

The room parameter may include but is not limited to, for example, a room identifier (RoomJID), a room password (RoomPassword), and a username (NickName), and further, may further include a room connection username (Room CR (Connection Request) Username) and a room connection password (Room CR (Connection Request) Password). The room identifier is used to identify a room that is allocated to the CPE, the room password and the username are a password and a username required when the CPE joins the room; and if the password and the username are not required when the CPE joins the room, the room parameter may include only the room identifier. When the ACS sends a connection request to the CPE, the CPE may perform verification on the ACS by using the room connection username and the room connection password. The room identifier, the room password, the username, the room connection username, and the room connection password are respectively equivalent to a group identifier, a second group password, a group username, a group connection username, and a group connection password in the embodiments shown in FIG. 1 and FIG. 2.

Step 405. The ACS sends a parameter setting command carrying the room parameter to the CPE.

Specifically, the ACS may set the room parameter in a CPE data model by using the parameter setting command.

Step 406. The ACS sends, to an XMPP server, a presence (Presence) message carrying a room identifier (Room JID), to create a room.

Step 407. After receiving the presence message sent by the ACS, the XMPP server creates the room according to the room identifier and sets the ACS as a room owner.

Step 408. The ACS acquires initial configuration information of the room, and then sends the initial configuration information to the XMPP server, so that the XMPP server configures the room.

The initial configuration information of the room includes but is not limited to any one or more of the following items: a room class, room permission, and a room login password. The initial configuration information of the room, the room class, the room permission, and the room login password are respectively equivalent to group information, a group class, group permission, and a first group password in the embodiments shown in FIG. 1 and FIG. 2.

For example, the ACS may set the room class to a moderated (moderated room) type, and in this type of room, only a message sent by a user with a speech permission is forwarded by the room; the ACS may set, by setting the room permission, whether to limit permission of a user to join the room; and the ACS may further set, by setting the room login password, whether a password is required when a user joins the room, and a required specific value of the password.

Step 409. The CPE sends a presence message carrying the room parameter to the XMPP server, so as to join the corresponding room.

After being allocated with a room parameter, each CPE may join a corresponding room.

Step 410. The ACS sends a connection request carrying the room identifier to the XMPP server.

After the ACS creates and configures the room, the ACS may perform step 410 according to a requirement, for example, when the ACS needs to communicate with a CPE in a room, the ACS performs step 410.

Step 411. The XMPP server forwards the connection request to all CPEs in the room.

The ACS is responsible for creating the room and allocating the room for the CPE; because the ACS is the creator of the room and has a highest permission, a message sent by the ACS to the room is forwarded by the XMPP server to each CPE in the room, so that communication between the ACS and multiple CPEs is implemented, for example, batch management of multiple CPEs by the ACS is implemented.

Step 412. After receiving the connection request forwarded by the XMPP server, the CPE sends a management session establishment request to the ACS.

The CPE may verify a connection by using the room connection username/password (Room CR (Connection Request) Username/Password).

Step 413. The ACS returns a management session establishment response and establishes a management session with the CPE.

After the ACS establishes the management session with the CPE, the ACS may directly send an operation command to each CPE to instruct the CPE to perform a corresponding operation.

It should be noted that, in another implementation manner, the foregoing step 410 to step 413 may be replaced by the following steps:
Step 410'. The ACS sends a communication message carrying the room identifier and an operation command to the XMPP server.
Step 411'. The XMPP server forwards the communication message to all CPEs in the room.
Step 412'. After receiving the communication message forwarded by the XMPP server, a CPE performs a corresponding operation according to the operation command, and returns, after executing the operation command, a response message.

In the embodiment shown in FIG. 4, after the ACS allocates the room parameter to the CPE, the room parameter is directly sent to the CPE. In another implementation manner, after the ACS allocates the room parameter to the CPE, the room parameter may be sent to the CPE in another manner, which is specifically described by using an embodiment shown in FIG. 5. A difference between embodiments shown in FIG. 5 and FIG. 4 is that the manner of sending a room parameter to the CPE is different. The following describes in detail the embodiment shown in FIG. 5.

FIG. 5 is another signaling diagram of a communication processing method according to an embodiment of the present invention, and based on the embodiments shown in FIG. 1 and FIG. 2, as shown in FIG. 5, the method includes:
Step 501. An ACS creates a room rule.
Step 502. The ACS sends, to a CPE, a message that is used to request terminal information of the CPE.
Step 503. The CPE sends the terminal information of the CPE to the ACS.
Step 504. The ACS allocates a room to the CPE according to the room rule and the terminal information of the CPE, and sets a room parameter for the CPE.
Step 505. The ACS sends, to an XMPP server, a presence (Presence) message carrying a room identifier (Room JID), to create a room.
Step 506. After receiving the presence message sent by the ACS, the XMPP server creates the room according to the room identifier and sets the ACS as a room owner.
Step 507. The ACS acquires initial configuration information of the room, and then sends the initial configuration information to the XMPP server, so that the XMPP server configures the room.

The foregoing step 501 to step 504 are respectively the same as step 401 to step 404 in the embodiment shown in FIG. 4; and step 505 to step 507 are respectively the same as step 406 to step 408 in the embodiment shown in FIG. 4.

Step 508. The ACS sends an invite message carrying the room parameter and a terminal device identifier (Device JID) of the CPE to the XMPP server. That is, the ACS sends an invite message including the terminal device identifier to the room. The invite message sent by the ACS to the XMPP server needs to include a terminal device identifier of a CPE to communicate with; and by this, the XMPP server can complete forwarding to the CPE.

For each CPE, the ACS sends one invite message.

Step 509. The XMPP server forwards the invite message carrying the room parameter to a CPE corresponding to the terminal device identifier.

In step 508 and step 509, the ACS may send an indirect invite message and may also send a direct invite message. In an indirect invite message received by the XMPP server, a destination address of the invite message points to the room, that is, the destination address may be the room identifier; and when forwarding the invite message to the CPE, the XMPP server modifies the destination address to pointing to the CPE and then performs the forwarding. In a direct invite message received by the XMPP server, a destination address of the invite message directly points to the CPE, that is, the destination address is the terminal device identifier of the CPE; and the XMPP forwards the invite message.

Step 510. The CPE sends a presence message carrying the room parameter to the XMPP server, so as to join the corresponding room.

Step 511. The ACS sends a connection request carrying the room identifier to the XMPP server.

Step 512. The XMPP server forwards the connection request to all CPEs in the room.

Step 513. After receiving the connection request forwarded by the XMPP server, a CPE sends a management session establishment request to the ACS.

Step 514. The XMPP server returns a management session establishment response and establishes a management session with the CPE.

The foregoing step 510 to step 514 are respectively the same as step 409 to step 413 in the embodiment shown in FIG. 4.

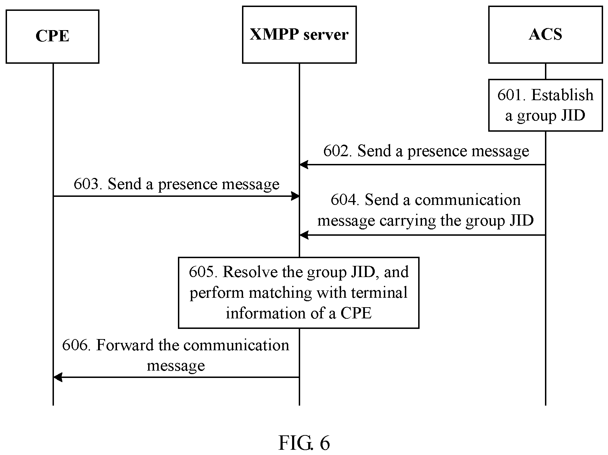

A JID is an identification manner of an XMPP entity (XMPP client/XMPP server) in the XMPP protocol. The XMPP server forwards a message by using the JID. In the embodiment of the present invention, the JID may be extended, so that the JID may not only identify one device but also identify multiple devices, and correspondingly, the XMPP server needs to recognize an extended JID. By extending the JID, communication between the ACS and multiple CPEs can be implemented, which is described in detail by using an embodiment shown in FIG. 6 in the following.

FIG. 6 is another signaling diagram of a communication processing method according to an embodiment of the present invention, and based on the embodiments shown in FIG. 3, as shown in FIG. 6, the method includes:
Step 601. An ACS establishes a group JID.

The group JID is equivalent to a group identifier in the embodiment shown in FIG. 3. The group JID may include but is not limited to the following information: a product class, device location information, a serial number, a hardware version, a software version, and a device vendor identifier. For example, a username part of the group JID (JID username) may include two parts: M-Type, where M indicates whether the JID is an identifier of a single device or an identifier of a multiple group, and Type is a specific value, and the value of Type may be one or more of a product class, device location information, a serial number, a hardware version, a software version, a device vendor identifier, and the like; and the M part is optional and may be considered as multiple devices by default.

Step 602. The ACS sends a presence message to an XMPP server, so as to establish a connection with the XMPP server.

Step 603. A CPE sends a presence message carrying terminal information of the CPE to the XMPP server, so as to establish a connection with the XMPP server.

One or more CPEs may proactively establish a connection with the XMPP server, and in this case the XMPP server may acquire terminal information of each CPE.

Step 604. The ACS sends, to the XMPP server, a communication message carrying the group JID, for example, an XMPP message, where the XMPP message may carry a connection request of the ACS and the connection request points to the group JID, or the XMPP message may carry an operation command and the operation command points to the group JID.

Step 605. After receiving the communication message sent by the ACS, the XMPP server resolves the group JID and performs matching with terminal information of a CPE that has established a connection with the XMPP server.

A format of the group JID may be M-Type, where M indicates whether the JID is an identifier of a single terminal or an identifier of a terminal group, and Type is a specific value. For example, the group JID is M-Type (OUT-ProductClass) and is specifically 1-FFFFFF-Gateway, where 1 indicates that the JID is a group identifier and FFFFFF-Gateway is a specific value; and terminal information of a CPE is Type (OUI-ProductClass-SerialNumber) and is specifically FFFFFF-Gateway-123456, in this case, the Type part of the group JID is consistent with the terminal information, and therefore the CPE is successfully matched to the group JID.

Step 606. The XMPP server forwards the communication message to all CPEs that are successful matched.

It should be noted that, after receiving the communication message, the CPE may perform a corresponding operation according to a type of the communication message.

If the communication message includes a connection request, after receiving the communication message, the CPE sends a management session establishment request to the ACS, and the ACS returns a management session establishment response and establishes a management session with the CPE.

If the communication message includes an operation command, after receiving the communication message, the CPE executes the operation command.

The embodiments of the present invention implement batch pull-up of devices based on the XMPP protocol, which reduces a burden on an ACS and a burden on an ACS network. In the embodiments of the present invention, the ACS needs to send only one connection request, and forwarding to multiple CPEs is completed by an XMPP server; and therefore a function of batch pull-up of devices is implemented. The embodiments of the present invention may be used for batch management of devices, and a command that is sent by the ACS to multiple CPEs may be forwarded to the multiple CPEs through the XMPP server, so that a function of batch management of devices is implemented.

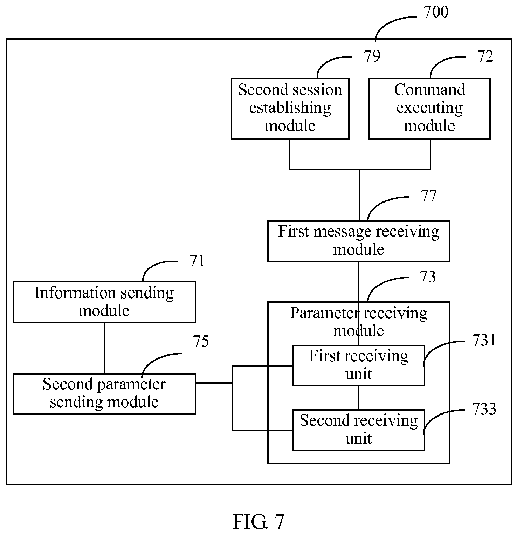

FIG. 7 is a schematic structural diagram of a terminal of an embodiment of the present invention, and as shown in FIG. 7, the terminal 700 includes: an information sending module 71, a parameter receiving module 73, a second parameter sending module 75, and a first message receiving module 77.

The terminal 700 may be for example a CPE, and the CPE may be for example a gateway (Gateway) or another device under the gateway, such as a set top box and a VoIP telephone.

The information sending module 71 is configured to send terminal information to a management server.

The parameter receiving module 73 is configured to receive a group parameter that is allocated to the terminal by the management server according to the terminal information sent by the information sending module 71, and send the group parameter to the second parameter sending module 75.

The second parameter sending module 75 is configured to send, to an XMPP server, a message carrying the group parameter received by the parameter receiving module 73, so as to join a terminal group corresponding to a group identifier included in the group parameter.

The first message receiving module 77 is configured to receive a second communication message that is sent by the XMPP server according a first communication message carrying the group identifier corresponding to the terminal group, where the first communication message is received by the XMPP server from the management server.

Further, on a basis of the foregoing embodiment, in another implementation manner, the parameter receiving module 73 may specifically include: a first receiving unit 731 and/or a second receiving unit 733.

The first receiving unit 731 is configured to receive a parameter setting message that is sent by the management server and carries the group parameter, and send the group parameter to the second parameter sending module 75, where the group parameter is allocated by the management server to the terminal according to the terminal information sent by the information sending module. The second receiving unit 733 is configured to receive an invite message that is sent by the XMPP server and carries the group parameter, and send the group parameter to the second parameter sending module 75, where the group parameter is allocated by the management server to the terminal according to the terminal information and sent to the XMPP server.

Further, in another implementation manner, the terminal 700 may further include: a second session establishing module 79 and/or a command executing module 72.

The second session establishing module 79 is configured to: after the first message receiving module 77 receives the second communication message that is sent by the XMPP server according the first communication message received from the management server, if the second communication message includes a connection request, establish a management session with the management server according to the second communication message received by the first message receiving module.

The command executing module 72 is configured to: after the first message receiving module 77 receives the second communication message that is sent by the XMPP server according the first communication message carrying the group identifier corresponding to the terminal group, if the second communication message includes an operation command, execute the operation command in the second communication message.

Specifically, the group identifier may be used to uniquely identify the terminal group; and the group parameter further includes any one or more of the following items: a second group password, a group username, a group connection username, and a group connection password.

The terminal provided in this embodiment of the present invention is used to implement the methods in the embodiments shown in FIG. 1, FIG. 2, FIG. 4, and FIG. 5. For specific workflows and principles, reference may be made to the foregoing method embodiments, and details are not described herein again.

According to this embodiment of the present invention, a terminal joins, according to a group parameter allocated by a management server to the terminal and through an XMPP server, a terminal group corresponding to the group parameter; and after the terminal joins the terminal group, when the management server needs to send a communication message to each terminal in the terminal group, the management server may send a communication message carrying a group identifier of the terminal group to the XMPP server, so that the XMPP server forwards the communication message to each terminal in the terminal group. Therefore, when the management server communicates with multiple terminals, the management server does not need to send multiple communication requests to the XMPP server, but only needs to send one communication request carrying a group identifier to the XMPP server, so as to be capable of communicating with the multiple terminals, thereby reducing network load on the management server and the XMPP server.

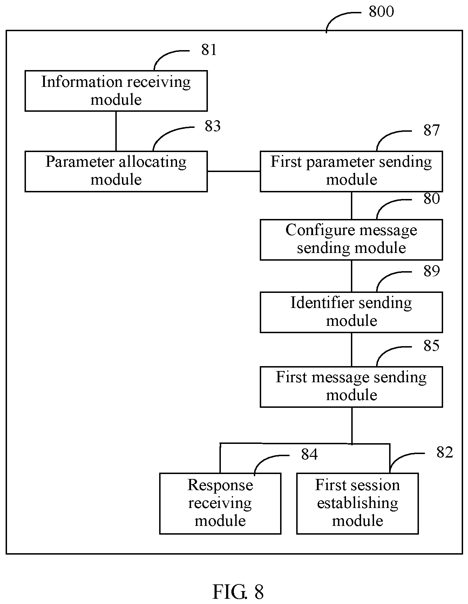

FIG. 8 is a schematic structural diagram of a management server according to an embodiment of the present invention, and as shown in FIG. 8, the management server 800 includes: an information receiving module 81, parameter allocating module 83, and a first message sending module 85.

The information receiving module 81 is configured to receive terminal information sent by a terminal.

The parameter allocating module 83 is configured to allocate a group parameter to the terminal according to the terminal information received by the information receiving module 81, so that the terminal joins, by sending a message carrying the group parameter to an XMPP server, a terminal group corresponding to a group identifier, where the group parameter includes the group identifier.

The first message sending module 85 is configured to send, to the XMPP server, a first communication message carrying the group identifier corresponding to the terminal group, so that the XMPP server sends, according to the first communication message, a second communication message to each terminal in the terminal group.

Further, on a basis of the foregoing embodiment, in another implementation manner, the management server 800 may further include: a first parameter sending module 87.

The first parameter sending module 87 is configured to: after the parameter allocating module 83 allocates the group parameter to the terminal according to the terminal information, send a parameter setting message carrying the group parameter to the terminal; or send an invite message carrying the group parameter and a terminal device identifier of the terminal to the XMPP server, so that the XMPP server sends the group parameter to the terminal.

Further, the management server 800 may further include: an identifier sending module 89 and a configure message sending module 80.

The identifier sending module 89 is configured to: before the first message sending module 85 sends, to the XMPP server, the first communication message carrying the group identifier corresponding to the terminal group, send a presence message carrying the group identifier to the XMPP server, so that the XMPP server creates, according to the group identifier, the terminal group corresponding to the group identifier.

The configure message sending module 80 is configured to: after the identifier sending module 89 sends the presence message carrying the group identifier to the XMPP server, send, to the XMPP server, a configure message that is used to configure group information of terminal group.

Specifically, the group information may include any one or more of the following items: a group class, group permission, and a first group password, where the group class is used to represent a communication manner of a terminal in the terminal group, the group permission is used represent a permission requirement of a terminal in the terminal group, and the first group password is used to represent a password required when a terminal joins the terminal group.

Further, the management server 800 may further include: a first session establishing module 82 and/or a response receiving module 84.

The first session establishing module 82 is configured to: after the first message sending module 85 sends the first communication message, if the first communication message includes a connection request, receive a management session establishment request that is sent by each terminal according to the second communication message, and establish a management session with each terminal.

The response receiving module 84 is configured to: after the first message sending module 85 sends the first communication message, if the first communication message includes an operation command, receive a response message from each terminal after each terminal executes the operation command.

Specifically, the group parameter may further include any one or more of the following items: a second group password, a group username, a group connection username and a group connection password.

Further, the parameter allocating module may specifically be configured to allocate the group parameter to the terminal according to the terminal information and a preset group rule.

The group rule includes any one or more of the following items: a product class, device location information, a serial number, a hardware version, a software version, and a device vendor identifier.

The management server provided in this embodiment of the present invention is used to implement the methods in the embodiments shown in FIG. 1, FIG. 2, FIG. 4, and FIG. 5. For specific workflows and principles, reference may be made to the foregoing method embodiments, and details are not described herein again.

According to this embodiment of the present invention, a management server allocates a group parameter to a terminal according to terminal information sent by the terminal and a group rule, so that the terminal may join, according to the group parameter and through an XMPP server, a terminal group corresponding to the group parameter; and after the terminal joins the terminal group, when the management server needs to send a communication message to each terminal in the terminal group, the management server may send a communication message carrying a group identifier of the terminal group to the XMPP server, so that the XMPP server forwards the communication message to each terminal in the terminal group. Therefore, when the management server communicates with multiple terminals, the management server does not need to send multiple communication requests to the XMPP server, but only needs to send one communication request carrying a group identifier to the XMPP server, so as to be capable of communicating with the multiple terminals, thereby reducing network load on the management server and the XMPP server.

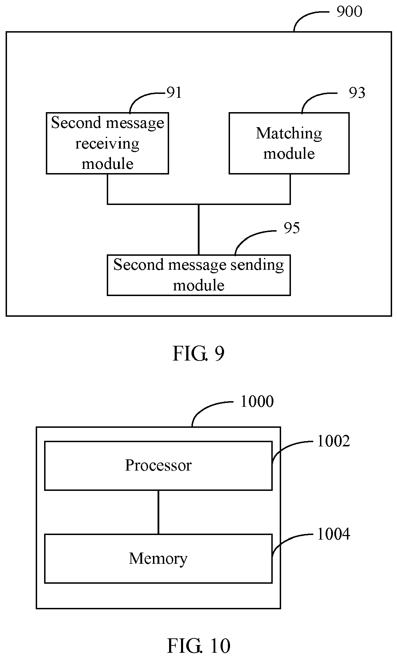

FIG. 9 is a schematic structural diagram of an XMPP server, and as shown in FIG. 9, the XMPP server 900 includes: a second message receiving module 91, a matching module 93, and a second message sending module 95.

The second message receiving module 91 is configured to receive a first communication message that is sent by a management server and carries a group identifier.

The matching module 93 is configured to search, according to terminal information received from at least one terminal and the group identifier received by the second message receiving module 91, for a terminal that matches the group identifier, where the terminal that matches the group identifier is that: terminal information of the terminal includes content that is the same as the group identifier.

The second message sending module 95 is configured to send, according to the first communication message received by the second message receiving module 91, a second communication message to each terminal that is found by the matching module 93 and matches the group identifier.

Further, the group identifier may specifically include any one or more of the following items: a product class, device location information, a serial number, a hardware version, a software version, and a device vendor identifier.

The XMPP server is used to implement the methods in the embodiments shown in FIG. 3 and FIG. 6. For specific workflows and principles, reference may be made to the foregoing method embodiments, and details are not described herein again.

According to this embodiment of the present invention, when a management server needs to communicate with a type of terminal, the management server may send, to an XMPP server, a communication message carrying a group identifier corresponding to this type of terminal, the XMPP server may find, according to the group identifier, multiple terminals that match the group identifier, and then the XMPP server separately sends a communication message to the multiple terminals found, thereby implementing communication between the management server and multiple terminals of a type. Therefore, when the management server establishes communication with multiple terminals, the management server does not need to send multiple communication requests to the XMPP server, but only needs to send one communication request carrying a group identifier to the XMPP server, so as to be capable of establishing communication with the multiple terminals, thereby reducing network load on the management server and the XMPP server.

FIG. 10 is another schematic structural diagram of a terminal according to an embodiment of the present invention, and as shown in FIG. 10, the terminal 1000 includes:
one or more processors 1002;
a memory 1004, and
one or more programs, where the one or more programs are stored in the memory 1004 and are configured to be executed by the one or more processors 1002, and the one or more programs include:
   an instruction to send terminal information to a management server;
   an instruction to receive a group parameter that is allocated by the management server to the terminal according to the terminal information;
   an instruction to send a message carrying the group parameter to an XMPP server, so as to join a terminal group corresponding to the group identifier included in the group parameter; and
   an instruction to receive a second communication message that is sent by the XMPP server according a first communication message carrying the group identifier corresponding to the terminal group, where the first communication message is received by the XMPP server from the management server.

Further, the one or more programs may further include:
an instruction to establish a management session with the management server according to a second communication message, if the second communication message includes the connection request, after the second communication message which is sent by the XMPP server according to the first communication message carrying the group identifier corresponding to the terminal group is received; or an instruction that the terminal executes the operation command in a second communication message, if the second communication message includes an operation command, after the second communication message which is sent by the XMPP server according to a first communication message carrying the group identifier corresponding to the terminal group is received.

Further, the instruction to receive a group parameter that is allocated by the management server to the terminal according to the terminal information may specifically include:
an instruction to receive a parameter setting message that is sent by the management server and carries the group parameter, where the group parameter is allocated by the management server to the terminal according to the terminal information, or
an instruction to receive an invite message that is sent by the XMPP server and carries the group parameter, where the group parameter is allocated by the management server to the terminal according to the terminal information and sent to the XMPP server.

Specifically, the group identifier is used to uniquely identify the terminal group; and the group parameter further includes any one or more of the following items: a second group password, a group username, a group connection username, and a group connection password.

The terminal provided in this embodiment of the present invention is used to implement the methods in the embodiments shown in FIG. 1, FIG. 2, FIG. 4, and FIG. 5. For specific workflows and principles, reference may be made to the foregoing method embodiments, and details are not described herein again.

According to this embodiment of the present invention, a terminal joins, according to a group parameter allocated by a management server to the terminal and through an XMPP server, a terminal group corresponding to the group parameter; and after the terminal joins the terminal group, when the management server needs to send a communication message to each terminal in the terminal group, the management server may send a communication message carrying a group identifier of the terminal group to the XMPP server, so that the XMPP server forwards the communication message to each terminal in the terminal group. Therefore, when the management server communicates with multiple terminals, the management server does not need to send multiple communication requests to the XMPP server, but only needs to send one communication request carrying a group identifier to the XMPP server, so as to be capable of communicating with the multiple terminals, thereby reducing network load on the management server and the XMPP server.

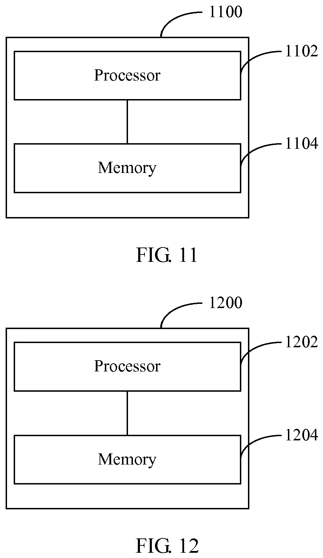

FIG. 11 is a schematic structural diagram of another management server according to an embodiment of the present invention, and as shown in FIG. 11, the management server 1100 includes:
one or more processors 1102;
a memory 1104, and
one or more programs, where the one or more programs are stored in the memory 1104 and are configured to be executed by the one or more processors 1102, and the one or more programs include:
   an instruction to receive terminal information sent by at least one terminal;
   an instruction to allocate a group parameter to the terminal according to the terminal information, so that the terminal joins, by sending a message carrying the group parameter to an XMPP server, a terminal group corresponding to a group identifier, where the group parameter includes the group identifier; and
   an instruction to send, to the XMPP server, a first communication message carrying the group identifier corresponding to the terminal group, so that the XMPP server sends, according to the first communication message, a second communication message to each terminal in the terminal group.

Further, the one or more programs may further include:
an instruction to receive a management session establishment request that is sent by each terminal according to second communication message and establish a management session with each terminal, if the first communication message includes a connection request, after the first communication message carrying the group identifier corresponding to the terminal group is sent to the XMPP server, so that the XMPP server sends, according to the first communication message, the second communication message to each terminal in the terminal group; or
an instruction to receive a response message which is returned after each terminal executes an operation command, if the first communication message includes the operation command, after the first communication message carrying the group identifier corresponding to the terminal group is sent to the XMPP server, so that the XMPP server sends, according to the first communication message, the second communication message to each terminal in the terminal group.

Further, the instruction to allocate a group parameter to the terminal according to the terminal information may specifically include:
an instruction to allocate the group parameter to the terminal according to the terminal information and a preset group rule; where
the group rule includes any one or more of the following items: a product class, device location information, a serial number, a hardware version, a software version, and a device vendor identifier.

Further, the one or more programs may further include:
an instruction to send a parameter setting message carrying the group parameter to the terminal after the group parameter is allocated to the terminal according to the terminal information; or
an instruction to send an invite message carrying the group parameter and a terminal device identifier of the terminal to the XMPP server after the group parameter is allocated to the terminal according to the terminal information, so that the XMPP server sends the group parameter to the terminal.

Further, the one or more programs may further include:
an instruction to send a presence message carrying the group identifier to the XMPP server before the first communication message carrying the group identifier corresponding to the terminal group is sent to the XMPP server, so that the XMPP server creates, according to the group identifier, a terminal group corresponding to the group identifier.

Further, the one or more programs may further include:
an instruction to send, to the XMPP server after the presence message carrying the group identifier is sent to the XMPP server, a configure message that is used to configure group information of the terminal group.

Specifically, the group information includes any one or more of the following items: a group class, group permission, and a first group password, where the group class is used to represent a communication manner of a terminal in the terminal group, the group permission is used to represent a permission requirement of a terminal in the terminal group, and the first group password is used to represent a password required when a terminal joins the terminal group.

Specifically, the group parameter further includes any one or more of the following items: a second group password, a group username, a group connection username and a group connection password.

The management server provided in this embodiment of the present invention is used to implement the methods in the embodiments shown in FIG. 1, FIG. 2, FIG. 4, and FIG. 5. For specific workflows and principles, reference may be made to the foregoing method embodiments, and details are described herein again.

According to this embodiment of the present invention, a management server allocates a group parameter to a terminal according to terminal information sent by the terminal and a group rule, so that the terminal may join, according to the group parameter and through an XMPP server, a terminal group corresponding to the group parameter; and after the terminal joins the terminal group, when the management server needs to send a communication message to each terminal in the terminal group, the management server may send a communication message carrying a group identifier of the terminal group to the XMPP server, so that the XMPP server forwards the communication message to each terminal in the terminal group. Therefore, when the management server communicates with multiple terminals, the management server does not need to send multiple communication requests to the XMPP server, but only needs to send one communication request carrying a group identifier to the XMPP server, so as to be capable of communicating with the multiple terminals, thereby reducing network load on the management server and the XMPP server.

FIG. 12 is another schematic structural diagram of an XMPP server, and as shown in FIG. 12, the XMPP 1200 includes:
one or more processors 1202;
a memory 1204, and
one or more programs, where the one or more programs are stored in the memory 1204 and are configured to be executed by the one or more processors 1202, and the one or more programs include:
   an instruction to receive a first communication message that is sent by a management server and carries a group identifier;
   an instruction to search, according to the group identifier and terminal information that is received from at least one terminal, for a terminal that matches the group identifier, where the terminal that matches the group identifier is that: terminal information of the terminal includes content that is the same as the group identifier; and
   an instruction to send, according to the first communication message, a second communication message to each terminal that is found to match the group identifier.

Specifically, the group identifier may include any one or more of the following items: a product class, device location information, a serial number, a hardware version, a software version, and a device vendor identifier.

Further, the one or more programs may further include:
an instruction to receive terminal information of each terminal before the terminal that matches the group identifier is searched for according to the group identifier and terminal information.

The XMPP server is used to implement the methods in the embodiments shown in FIG. 3 and FIG. 6. For specific workflows and principles, reference may be made to the foregoing method embodiments, and details are not described herein again.

According to this embodiment of the present invention, when a management server needs to communicate with a type of terminal, the management server may send, to an XMPP server, a communication message carrying a group identifier corresponding to this type of terminal, the XMPP server may find, according to the group identifier, multiple terminals that match the group identifier, and then the XMPP server separately sends a communication message to the multiple terminals found, thereby implementing communication between the management server and multiple terminals of a type. Therefore, when the management server establishes communication with multiple terminals, the management server does not need to send multiple communication requests to the XMPP server, but only needs to send one communication request carrying a group identifier to the XMPP server, so as to be capable of establishing communication with the multiple terminals, thereby reducing network load on the management server and the XMPP server.

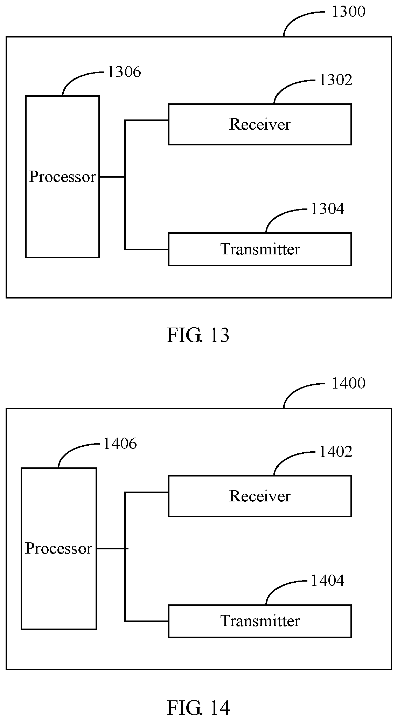

FIG. 13 is another schematic structural diagram of a terminal of an embodiment of the present invention, and as shown in FIG. 13, the terminal 1300 includes: a receiver 1302, a transmitter 1304, and a processor 1306, where the processor 1306 is separately connected to the receiver 1302 and the transmitter 1304.

The receiver 1302 is configured to receive a message sent by a management server and an XMPP server.

The transmitter 1304 is configured to send a message to the management server and the XMPP server.

The processor 1306 is configured to: send terminal information to the management server by using the transmitter 1304; receive, by using the receiver 1302, a group parameter that is allocated by the management server to the terminal according to the terminal information; send, by using the transmitter 1304, a message carrying the group parameter to the XMPP server, so as to join a terminal group corresponding to a group identifier included in the group parameter; and receive, by using the receiver 1302, a second communication message that is sent by the XMPP server according to a first communication message carrying the group identifier corresponding to the terminal group, where the first communication message is received by the XMPP server from the management server.

Further, the processor 1306 is further configured to: after the second communication message that is sent, according to the first communication message received from the management server, by the XMPP server is received by using the receiver 1302, if the second communication message includes a connection request, establish a management session with the management server according to the second communication message; or if the second communication message includes an operation command, execute the operation command in the second communication message.

Further, that the processor 1306 receives, by using the receiver 1302, a group parameter that is allocated by the management server to the terminal according to the terminal information may specifically include:
receiving, by the processor 1306 by using the receiver 1302, a parameter setting message that is sent by the management server and carries the group parameter, where the group parameter is allocated by the management server to the terminal according to the terminal information; or
receiving, by the processor 1306 by using the receiver 1302, an invite message that is sent by the XMPP server and carries the group parameter, where the group parameter is allocated by the management server to the terminal according to the terminal information and sent to the XMPP server.

Specifically, the group identifier is used to uniquely identify the terminal group; and the group parameter further includes any one or more of the following items: a second group password, a group username, a group connection username, and a group connection password.

The terminal provided in this embodiment of the present invention is used to implement the methods in the embodiments shown in FIG. 1, FIG. 2, FIG. 4, and FIG. 5. For specific workflows and principles, reference may be made to the foregoing method embodiments, and details are not described herein again.

According to this embodiment of the present invention, a terminal joins, according to a group parameter allocated by a management server to the terminal and through an XMPP server, a terminal group corresponding to the group parameter; and after the terminal joins the terminal group, when the management server needs to send a communication message to each terminal in the terminal group, the management server may send a communication message carrying a group identifier of the terminal group to the XMPP server, so that the XMPP server forwards the communication message to each terminal in the terminal group. Therefore, when the management server communicates with multiple terminals, the management server does not need to send multiple communication requests to the XMPP server, but only needs to send one communication request carrying a group identifier to the XMPP server, so as to be capable of communicating with the multiple terminals, thereby reducing network load on the management server and the XMPP server.

FIG. 14 is another schematic structural diagram of a management server according to an embodiment of the present invention, and as shown in FIG. 14, the management server 1400 includes: a receiver 1402, a transmitter 1404, and a processor 1406, where the processor 1406 is separately connected to the receiver 1402 and the transmitter 1404.

The receiver 1402 is configured to receive a message sent by a terminal and an XMPP server.

The transmitter 1404 is configured to send a message to the terminal and the XMPP server.

The processor 1406 is configured to: receive, by using the receiver 1402, terminal information sent by a terminal; allocate a group parameter to the terminal according to the terminal information, so that the terminal joins, by sending a message carrying the group parameter to the XMPP server, a terminal group corresponding to a group identifier included in the group parameter; and send, to the XMPP server, by using the transmitter 1404, a first communication message carrying the group identifier corresponding to the terminal group, so that the XMPP server sends, according to the first communication message, a second communication message to each terminal in the terminal group.

Further, the processor 1406 is further configured to: after the first communication message carrying the group identifier corresponding to the terminal group is sent to the XMPP server, so that the XMPP server sends, according to the first communication message, a second communication message to each terminal in the terminal group, if the first communication message includes a connection request, receive, by using the receiver 1402, a management session establishment request that is sent by each terminal according to the second communication message, and establish a management session with each terminal; or if the first communication message includes an operation command, receive, by using the receiver 1402, a response message from each terminal after each terminal executes the operation command.

Specifically, that the processor 1406 allocates a group parameter to the terminal according to the terminal information includes: allocating the group parameter to the terminal according to the terminal information and a preset group rule, where the group rule includes any one or more of the following items: a product class, device location information, a serial number, a hardware version, a software version, and a device vendor identifier.

Further, the processor 1406 is further configured to: after the group parameter is allocated to the terminal according to the terminal information, send, by using the transmitter 1404, a parameter setting message carrying the group parameter to the terminal; or after the group parameter is allocated to the terminal according to the terminal information, send, by using the transmitter 1404, an invite message carrying the group parameter and a terminal device identifier of the terminal to the XMPP server, so that the XMPP server sends the group parameter to the terminal.

Further, the processor 1406 is further configured to before the first communication message carrying the group identifier corresponding to the terminal group is sent to the XMPP server by using the transmitter 1404, send, by using the transmitter 1404, a presence message carrying the group identifier to the XMPP server, so that the XMPP servers creates, according to the group identifier, a terminal group corresponding to the group identifier.

Further, the processor 1406 is further configured to: after the presence message carrying the group identifier is sent to the XMPP server, send, to the XMPP server, by using the transmitter 1404, a configure message that is used to configure group information of the terminal group.

Specifically, the group information includes any one or more of the following items: a group class, group permission, and a first group password, where the group class is used to represent a communication manner of a terminal in the terminal group, the group permission is used to represent a permission requirement of a terminal in the terminal group, and the first group password is used to represent a password required when a terminal joins the terminal group.

Specifically, the group parameter further includes any one or more of the following items: a second group password, a group username, a group connection username and a group connection password.

The management server provided in this embodiment of the present invention is used to implement the methods in the embodiments shown in FIG. 1, FIG. 2, FIG. 4, and FIG. 5. For specific workflows and principles, reference may be made to the foregoing method embodiments, and details are not described herein again.

According to this embodiment of the present invention, a management server allocates a group parameter to a terminal according to terminal information sent by the terminal and a group rule, so that the terminal may join, according to the group parameter and through an XMPP server, a terminal group corresponding to the group parameter; and after the terminal joins the terminal group, when the management server needs to send a communication message to each terminal in the terminal group, the management server may send a communication message carrying a group identifier of the terminal group to the XMPP server, so that the XMPP server forwards the communication message to each terminal in the terminal group. Therefore, when the management server communicates with multiple terminals, the management server does not need to send multiple communication requests to the XMPP server, but only needs to send one communication request carrying a group identifier to the XMPP server, so as to be capable of communicating with the multiple terminals, thereby reducing network load on the management server and the XMPP server.

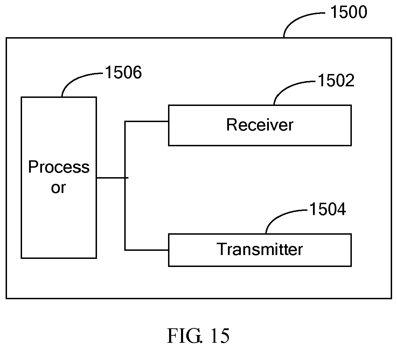

FIG. 15 is another schematic structural diagram of an XMPP server, and as shown in FIG. 15, the XMPP server 1500 includes: a receiver 1502, a transmitter 1504, and a processor 1506, where the processor 1506 is separately connected to the receiver 1502 and the transmitter 1504.

The receiver 1502 is configured to receive a message sent by a terminal and a management server.

The transmitter 1504 is configured to send a message to the terminal and the management server.

The processor 1506 is configured to: receive, by using the receiver 1502, a first communication message that is sent by the management server and carries a group identifier; search, according to the group identifier and terminal information that is received from at least one terminal, for a terminal that matches the group identifier, where the terminal that matches the group identifier is that: terminal information of the terminal includes content that is the same as the group identifier; and send, according to the first communication message and by using the transmitter 1504, a second communication message to each terminal that is found to match the group identifier.

Specifically, the group identifier may include any one or more of the following items: a product class, device location information, a serial number, a hardware version, a software version, and a device vendor identifier.

Further, the processor 1506 is further configured to: before the terminal that matches the group identifier is searched for according to the group identifier and terminal information that is received from at least one terminal, receive, by using the receiver 1502, the terminal information sent by at least one terminal.

The XMPP server is used to implement the methods in the embodiments shown in FIG. 3 and FIG. 6. For specific workflows and principles, reference may be made to the foregoing method embodiments, and details are not described herein again.

According to this embodiment of the present invention, when a management server needs to communicate with a type of terminal, the management server may send, to an XMPP server, a communication message carrying a group identifier corresponding to this type of terminal, the XMPP server may find, according to the group identifier, multiple terminals that match the group identifier, and then the XMPP server separately sends a communication message to the multiple terminals found, thereby implementing communication between the management server and multiple terminals of a type. Therefore, to be capable of establishing communication with multiple terminals when the management server establishes communication with multiple terminals, the management server does not need to send multiple communication requests to the XMPP server, but only needs to send one communication request carrying a group identifier to the XMPP server, thereby reducing network load on the management server and the XMPP server.

According to the foregoing descriptions of the implementation manners, a person skilled in the art can clearly understand that the present invention may be implemented by using hardware, firmware, or a combination of hardware and firmware. When software is used for implementation, the foregoing functions may be stored in a computer readable medium or transmitted as one or more instructions or code on the computer readable medium. The computer readable medium includes a computer storage medium and a communications medium, where the communications medium includes any medium that facilitates transfer of a computer program from one place to another place, and the storage medium may be any available medium that the computer can access. The following is used as an example without limitation: the computer readable medium may include a RAM, a ROM, an EEPROM, a CD-ROM, or another magnetic disk storage and optical disc storage medium, or another magnetic storage device, or any other medium that can be used to carry or store expected program code in a form of instructions or a data structure and can be accessed by a computer. In addition, any connection can become the computer readable medium when appropriate. For example, if software is transmitted from a website, a server, or another remote source by using a coaxial cable, an optical fiber cable, a twisted pair cable, a digital subscriber line (DSL), or wireless technologies such as infrared, radio, and microwave, then, the coaxial cable, the optical fiber cable, the twisted pair cable, the digital subscriber line (DSL), or wireless technologies such as the infrared, the radio, and the microwave are included in the definition of the medium. A disk (disk) and a disc (disc) used in the present invention include a compact disc (CD), a laser disc, an optical disc, and a digital versatile disc (DVD), a floppy disk, and blu-ray disc, where a disk usually replicates data magnetically whereas a disc is used to replicates data optically by using a laser. The foregoing combination shall also fall within the protection scope of the computer readable medium.

In conclusion, the foregoing descriptions are only exemplary embodiments of the present invention, and are not to limit the protection scope of the present invention. Any modifications, equivalent replacements, improvements, and the like made within the scope of the claims shall fall within the protection scope of the present invention.

## Claims

1. A communication processing method, comprising:
receiving (102), at a management server, terminal information sent by a terminal;
allocating (103), by the management server, a group parameter to the terminal according to the terminal information, so that the terminal joins a terminal group corresponding to a group identifier by sending a message carrying the group parameter to an Extensible Messaging and Presence Protocol XMPP server, wherein the group parameter comprises the group identifier; **characterized in that** the method is further comprising:
sending (106), by the management server, to the XMPP server, a first communication message carrying the group identifier corresponding to the terminal group, so that the XMPP server sends a second communication message to each terminal in the terminal group according to the first communication message; wherein after the sending, to the XMPP server, a first communication message carrying the group identifier corresponding to the terminal group, so that the XMPP server sends a second communication message to each terminal in the terminal group according to the first communication message, the method further comprises:
if the first communication message comprises a connection request, receiving (212), by the management server, a management session establishment request that is sent by each terminal according to the second communication message, and establishing a management session with each terminal; or
if the first communication message comprises an operation command, receiving, by the management server, a response message from each terminal after each terminal executes the operation command.

2. The method according to claim 1, wherein the allocating (103), by the management server, a group parameter to the terminal according to the terminal information comprises:
allocating (203), by the management server, the group parameter to the terminal according to the terminal information and a preset group rule, wherein
the group rule comprises any one or more of the following items: a product class, device location information, a serial number, a hardware version, a software version, and a device vendor identifier.

3. The method according to any one of claims 1 or 2, wherein, after the allocating (103), by the management server, a group parameter to the terminal according to the terminal information, the method further comprises:
sending by the management server, a parameter setting message carrying the group parameter to the terminal; or
sending by the management server, to the XMPP server, an invite message carrying the group parameter and a terminal device identifier, so that the XMPP server sends the group parameter to the terminal.

4. A communication processing method, comprising:
sending (201), by a terminal, terminal information to a management server;
receiving, by the terminal, a group parameter that is allocated by the management server to the terminal according to the terminal information;
sending (208), by the terminal, a message carrying the group parameter to an Extensible Messaging and Presence Protocol XMPP server, so as to join a terminal group corresponding to a group identifier comprised in the group parameter; and
receiving (210), by the terminal, a second communication message that is sent by the XMPP server according a first communication message carrying the group identifier corresponding to the terminal group, wherein the first communication message is received by the XMPP server from the management server; **characterized in that** the method is further comprising:
after the receiving (210), by the terminal, a second communication message that is sent by the XMPP server according a first communication message carrying the group identifier corresponding to the terminal group, the method further comprises:
if the second communication message comprises a connection request, establishing, by the terminal, a management session with the management server according to the second communication message; or
if the second communication message comprises an operation command, executing, by the terminal, the operation command in the second communication message and, after executing the operation command, sending a response message to the management server.

5. The method according to claim 4, wherein the receiving, by the terminal, a group parameter that is allocated by the management server to the terminal according to the terminal information comprises:
receiving (205), by the terminal, a parameter setting message that is sent by the management server and carries the group parameter, wherein the group parameter is allocated by the management server to the terminal according to the terminal information, or
receiving, by the terminal, an invite message that is sent by the XMPP server and carries the group parameter, wherein the group parameter is allocated by the management server to the terminal according to the terminal information and sent to the XMPP server.

6. The method according to claim 4 or 5, wherein:
the group identifier is used to uniquely identify the terminal group; and
the group parameter further comprises any one or more of the following items: a second group password, a group username, a group connection username and a group connection password.

7. A management server (800), comprising:
an information receiving module (81), configured to receive terminal information sent by a terminal;
a parameter allocating module (83), configured to allocate a group parameter to the terminal according to the terminal information received by the information receiving module (81), so that the terminal joins, by sending a message carrying the group parameter to an Extensible Messaging and Presence Protocol XMPP server, a terminal group corresponding to a group identifier, wherein the group parameter comprises the group identifier; **characterized by** a first message sending module (85), configured to send, to the XMPP server, a first communication message carrying the group identifier corresponding to the terminal group, so that the XMPP server sends, according to the first communication message, a second communication message to each terminal in the terminal group;
a first session establishing module (82), configured to: after the first message sending module sends the first communication message, if the first communication message comprises a connection request, receive a management session establishment request that is sent by each terminal according to the second communication message, and establish a management session with each terminal; and/or
a response receiving module (84), configured to: after the first message sending module sends the first communication message, if the first communication message comprises an operation command, receive a response message from each terminal after each terminal executes the operation command.

8. A terminal (700), comprising:
an information sending module (71), configured to send terminal information to a management server;
a parameter receiving module (73), configured to receive a group parameter that is allocated to the terminal by the management server according to the terminal information sent by the information sending module, and send the group parameter to a second parameter sending module (75);
the second parameter sending module (75), configured to send, to an Extensible Messaging and Presence Protocol XMPP server, a message carrying the group parameter received by the parameter receiving module, so as to join a terminal group corresponding to a group identifier comprised in the group parameter; **characterized by** further comprising:
a first message receiving module (77), configured to receive a second communication message that is sent by the XMPP server according a first communication message carrying the group identifier corresponding to the terminal group, wherein the first communication message is received by the XMPP server from the management server;
a second session establishing module (79), configured to: after the first message receiving module receives the second communication message that is sent by the XMPP server according the first communication message carrying the group identifier corresponding to the terminal group, if the second communication message comprises a connection request, establish a management session with the management server according to the second communication message received by the first message receiving module (77); and/or
a command executing module (72), configured to: after the first message receiving module (77) receives the second communication message that is sent by the XMPP server according the first communication message carrying the group identifier corresponding to the terminal group, if the second communication message comprises an operation command, execute the operation command in the second communication message and, after executing the operation command, send a response message to the management server.

9. The terminal (700) according to claim 8, wherein the parameter receiving module (73) comprises a first receiving unit (731) and/or a second receiving unit (733), wherein
the first receiving unit (731) is configured to receive a parameter setting message that is sent by the management server and carries the group parameter, wherein the group parameter is allocated by the management server to the terminal according to the terminal information sent by the information sending module; and
the second receiving unit (733) is configured to receive an invite message that is sent by the XMPP server and carries the group parameter, wherein the group parameter is allocated by the management server to the terminal according to the terminal information and sent to the XMPP server.

10. The terminal (700) according to claim 8 or 9, wherein:
the group identifier is used to uniquely identify the terminal group; and
the group parameter further comprises any one or more of the following items: a second group password, a group username, a group connection username and a group connection password.

## Patentansprüche

1. Kommunikationsverarbeitungsverfahren, umfassend:
Empfangen (102), an einem Verwaltungsserver, von Endgeräteinformationen, die durch ein Endgerät gesendet werden;
Zuweisen (103), durch den Verwaltungsserver, eines Gruppenparameters an das Endgerät gemäß den Endgeräteinformationen, so dass das Endgerät einer Endgerätegruppe, die einer Gruppenkennung entspricht, beitritt, indem eine Nachricht, die den Gruppenparameter führt, zu einem "Extensible Messaging and Presence Protocol"-Server bzw. XMPP-Server gesendet wird, wobei der Gruppenparameter die Gruppenkennung umfasst; **dadurch gekennzeichnet, dass** das Verfahren ferner Folgendes umfasst:
Senden (106), durch den Verwaltungsserver, zum XMPP-Server, einer ersten Kommunikationsnachricht, die die Gruppenkennung, die der Endgerätegruppe entspricht, führt, so dass der XMPP-Server eine zweite Kommunikationsnachricht zu jedem Endgerät in der Endgerätegruppe gemäß der ersten Kommunikationsnachricht sendet; wobei
das Verfahren nach dem Senden, zum XMPP-Server, einer ersten Kommunikationsnachricht, die die Gruppenkennung, die der Endgerätegruppe entspricht, führt, so dass der XMPP-Server eine zweite Kommunikationsnachricht zu jedem Endgerät in der Endgerätegruppe gemäß der ersten Kommunikationsnachricht sendet, ferner Folgendes umfasst:
falls die erste Kommunikationsnachricht eine Verbindungsanforderung umfasst, Empfangen (212), durch den Verwaltungsserver, einer Verwaltungssitzungserstellungsanforderung, die durch jedes Endgerät gemäß der zweiten Kommunikationsnachricht gesendet wird, und Erstellen einer Verwaltungssitzung mit jedem Endgerät; oder
falls die erste Kommunikationsnachricht einen Operationsbefehl umfasst, Empfangen, durch den Verwaltungsserver, einer Antwortnachricht von jedem Endgerät, nachdem jedes Endgerät den Operationsbefehl ausführt.

2. Verfahren nach Anspruch 1, wobei das Zuweisen (103), durch den Verwaltungsserver, eines Gruppenparameters an das Endgerät gemäß den Endgeräteinformationen Folgendes umfasst:
Zuweisen (203), durch den Verwaltungsserver, des Gruppenparameters an das Endgerät gemäß den Endgeräteinformationen und einer voreingestellten Gruppenregel, wobei
die Gruppenregel ein beliebiges oder mehrere der folgenden Elemente umfasst: eine Produktklasse, Einrichtungspositionsinformationen, eine Seriennummer, eine Hardwareversion, eine Softwareversion und eine Einrichtungsverkäuferkennung.

3. Verfahren nach einem der Ansprüche 1 oder 2, wobei das Verfahren nach dem Zuweisen (103), durch den Verwaltungsserver, eines Gruppenparameters an das Endgerät gemäß den Endgeräteinformationen ferner Folgendes umfasst:
Senden, durch den Verwaltungsserver, einer Parametereinstellungsnachricht, die den Gruppenparameter führt, zum Endgerät; oder
Senden, durch den Verwaltungsserver, zum XMPP-Server, einer Einladungsnachricht, die den Gruppenparameter und eine Endgeräteeinrichtungskennung führt, so dass der XMPP-Server den Gruppenparameter zum Endgerät sendet.

4. Kommunikationsverarbeitungsverfahren, umfassend:
Senden (201), durch ein Endgerät, von Endgeräteinformationen zu einem Verwaltungsserver;
Empfangen, durch das Endgerät, eines Gruppenparameters, der durch den Verwaltungsserver an das Endgerät gemäß den Endgeräteinformationen zugewiesen wird;
Senden (208), durch das Endgerät, einer Nachricht, die den Gruppenparameter führt, zu einem "Extensible Messaging and Presence Protocol"-Server bzw. XMPP-Server, um einer Endgerätegruppe, die einer im Gruppenparameter enthaltenen Gruppenkennung entspricht, beizutreten; und
Empfangen (210), durch das Endgerät, einer zweiten Kommunikationsnachricht, die durch den XMPP-Server gemäß einer ersten Kommunikationsnachricht, die die der Endgerätegruppe entsprechende Gruppenkennung führt, gesendet wird, wobei die erste Kommunikationsnachricht durch den XMPP-Server vom Verwaltungsserver empfangen wird;
**dadurch gekennzeichnet, dass** das Verfahren ferner Folgendes umfasst:
wobei das Verfahren nach dem Empfangen (210), durch das Endgerät, einer zweiten Kommunikationsnachricht, die durch den XMPP-Server gemäß einer ersten Kommunikationsnachricht, die die der Endgerätegruppe entsprechende Gruppenkennung führt, gesendet wird, ferner Folgendes umfasst:
falls die zweite Kommunikationsnachricht eine Verbindungsanforderung umfasst, Erstellen, durch das Endgerät, einer Verwaltungssitzung mit dem Verwaltungsserver gemäß der zweiten Kommunikationsnachricht; oder
falls die zweite Kommunikationsnachricht einen Operationsbefehl umfasst, Ausführen, durch das Endgerät, des Operationsbefehls in der zweiten Kommunikationsnachricht und, nach dem Ausführen des Operationsbefehls, Senden einer Antwortnachricht zum Verwaltungsserver.

5. Verfahren nach Anspruch 4, wobei das Empfangen, durch das Endgerät, eines Gruppenparameters, der durch den Verwaltungsserver an das Endgerät gemäß den Endgeräteinformationen zugewiesen wird, Folgendes umfasst:
Empfangen (205), durch das Endgerät, einer Parametereinstellungsnachricht, die durch den Verwaltungsserver gesendet wird und den Gruppenparameter führt, wobei der Gruppenparameter durch den Verwaltungsserver an das Endgerät gemäß den Endgeräteinformationen zugewiesen wird, oder
Empfangen, durch das Endgerät, einer Einladungsnachricht, die durch den XMPP-Server gesendet wird und den Gruppenparameter führt, wobei der Gruppenparameter durch den Verwaltungsserver an das Endgerät gemäß den Endgeräteinformationen zugewiesen und zum XMPP-Server gesendet wird.

6. Verfahren nach Anspruch 4 oder 5, wobei:
die Gruppenkennung zum eindeutigen Identifizieren der Endgerätegruppe verwendet wird und
der Gruppenparameter ferner ein beliebiges oder mehrere der folgenden Elemente umfasst: ein zweites Gruppenpasswort, einen Gruppenbenutzernamen, einen Gruppenverbindungsbenutzernamen und ein Gruppenverbindungspasswort.

7. Verwaltungsserver (800), umfassend:
ein Informationsempfangsmodul (81), das konfiguriert ist zum Empfangen von Endgeräteinformationen, die durch ein Endgerät gesendet werden;
ein Parameterzuweisungsmodul (83), das konfiguriert ist zum Zuweisen eines Gruppenparameters an das Endgerät gemäß den Endgeräteinformationen, die durch das Informationsempfangsmodul (81) empfangen werden, so dass das Endgerät einer Endgerätegruppe, die einer Gruppenkennung entspricht, beitritt, indem eine Nachricht, die den Gruppenparameter führt, zu einem "Extensible Messaging and Presence Protocol"-Server bzw. XMPP-Server gesendet wird, wobei der Gruppenparameter die Gruppenkennung umfasst; **gekennzeichnet durch**
ein erstes Nachrichtensendemodul (85), das konfiguriert ist zum Senden, zum XMPP-Server, einer ersten Kommunikationsnachricht, die die Gruppenkennung, die der Endgerätegruppe entspricht, führt, so dass der XMPP-Server eine zweite Kommunikationsnachricht zu jedem Endgerät in der Endgerätegruppe gemäß der ersten Kommunikationsnachricht sendet;
ein erstes Sitzungserstellungsmodul (82), das, nachdem das erste Nachrichtensendemodul die erste Kommunikationsnachricht sendet, falls die erste Kommunikationsnachricht eine Verbindungsanforderung umfasst, konfiguriert ist zum Empfangen einer Verwaltungssitzungserstellungsanforderung, die durch jedes Endgerät gemäß der zweiten Kommunikationsnachricht gesendet wird, und zum Erstellen einer Verwaltungssitzung mit jedem Endgerät; und/oder
ein Antwortempfangsmodul (84), das, nachdem das erste Nachrichtensendemodul die erste Kommunikationsnachricht sendet, falls die erste Kommunikationsnachricht einen Operationsbefehl umfasst, konfiguriert ist zum Empfangen einer Antwortnachricht von jedem Endgerät, nachdem jedes Endgerät den Operationsbefehl ausführt.

8. Endgerät (700), umfassend:
ein Informationssendemodul (71), das konfiguriert ist zum Senden von Endgeräteinformationen zu einem Verwaltungsserver;
ein Parameterempfangsmodul (73), das konfiguriert ist zum Empfangen eines Gruppenparameters, der durch den Verwaltungsserver an das Endgerät gemäß den Endgeräteinformationen, die durch das Informationssendemodul gesendet werden, zugewiesen wird, und zum Senden des Gruppenparameters zu einem zweiten Parametersendemodul (75);
das zweite Parametersendemodul (75), das konfiguriert ist zum Senden einer Nachricht, die den durch das Parameterempfangsmodul empfangenen Gruppenparameter führt, zu einem "Extensible Messaging and Presence Protocol"-Server bzw. XMPP-Server, um einer Endgerätegruppe, die einer im Gruppenparameter enthaltenen Gruppenkennung entspricht, beizutreten; **dadurch gekennzeichnet, dass** es ferner Folgendes umfasst:
ein erstes Nachrichtenempfangsmodul (77), das konfiguriert ist zum Empfangen einer zweiten Kommunikationsnachricht, die durch den XMPP-Server gemäß einer ersten Kommunikationsnachricht, die die der Endgerätegruppe entsprechende Gruppenkennung führt, gesendet wird, wobei die erste Kommunikationsnachricht durch den XMPP-Server vom Verwaltungsserver empfangen wird;
ein zweites Sitzungserstellungsmodul (79), das, nachdem das erste Nachrichtenempfangsmodul die zweite Kommunikationsnachricht empfängt, die durch den XMPP-Server gemäß der ersten Kommunikationsnachricht, die die der Endgerätegruppe entsprechende Gruppenkennung führt, gesendet wird, falls die zweite Kommunikationsnachricht eine Verbindungsanforderung umfasst, konfiguriert ist zum Erstellen einer Verwaltungssitzung mit dem Verwaltungsserver gemäß der zweiten Kommunikationsnachricht, die durch das erste Nachrichtenempfangsmodul (77) empfangen wird; und/oder
ein Befehlsausführungsmodul (72), das, nachdem das erste Nachrichtenempfangsmodul (77) die zweite Kommunikationsnachricht empfängt, die durch den XMPP-Server gemäß der ersten Kommunikationsnachricht, die die der Endgerätegruppe entsprechende Gruppenkennung führt, gesendet wird, falls die zweite Kommunikationsnachricht einen Operationsbefehl umfasst, konfiguriert ist zum Ausführen des Operationsbefehls in der zweiten Kommunikationsnachricht und, nach dem Ausführen des Operationsbefehls, zum Senden einer Antwortnachricht zum Verwaltungsserver.

9. Endgerät (700) nach Anspruch 8, wobei das Parameterempfangsmodul (73) eine erste Empfangseinheit (731) und/oder eine zweite Empfangseinheit (733) umfasst, wobei
die erste Empfangseinheit (731) konfiguriert ist zum Empfangen einer Parametereinstellungsnachricht, die durch den Verwaltungsserver gesendet wird und den Gruppenparameter führt, wobei der Gruppenparameter durch den Verwaltungsserver an das Endgerät gemäß den Endgeräteinformationen, die durch das Informationssendemodul gesendet werden, zugewiesen wird; und
die zweite Empfangseinheit (733) konfiguriert ist zum Empfangen einer Einladungsnachricht, die durch den XMPP-Server gesendet wird und den Gruppenparameter führt, wobei der Gruppenparameter durch den Verwaltungsserver an das Endgerät gemäß den Endgeräteinformationen zugewiesen und zum XMPP-Server gesendet wird.

10. Endgerät (700) nach Anspruch 8 oder 9, wobei:
die Gruppenkennung zum eindeutigen Identifizieren der Endgerätegruppe verwendet wird und
der Gruppenparameter ferner ein beliebiges oder mehrere der folgenden Elemente umfasst: ein zweites Gruppenpasswort, einen Gruppenbenutzernamen, einen Gruppenverbindungsbenutzernamen und ein Gruppenverbindungspasswort.

## Revendications

1. Procédé de traitement de communication consistant à :
recevoir (102), à un serveur de gestion, des informations de terminal envoyées par un terminal ;
attribuer (103), avec le serveur de gestion, un paramètre de groupe au terminal en fonction des informations de terminal de sorte que le terminal rejoigne un groupe de terminaux correspondant à un identifiant de groupe en envoyant un message comportant le paramètre de groupe à un serveur de messagerie extensible et de protocole de présence XMPP, dans lequel le paramètre de groupe comprend l'identifiant de groupe ; **caractérisé en ce que** le procédé consiste en outre à :
envoyer (106), avec le serveur de gestion, au serveur XMPP, un premier message de communication comportant l'identifiant de groupe correspondant au groupe de terminaux, de sorte que le serveur XMPP envoie un second message de communication à chaque terminal dans le groupe de terminaux en fonction du premier message de communication ;
dans lequel
après l'envoi au serveur XMPP d'un premier message de communication comportant l'identifiant de groupe correspondant au groupe de terminaux, de sorte que le serveur XMPP envoie un second message de communication à chaque terminal dans le groupe de terminaux en fonction du premier message de communication, le procédé consiste en outre à :
si le premier message de communication comprend une requête de connexion, recevoir (212), par le serveur de gestion, une requête d'établissement de session de gestion qui est envoyée par chaque terminal en fonction du second message de communication, et établir une session de gestion avec chaque terminal ; ou
si le premier message de communication comprend une instruction opérationnelle, recevoir, par le serveur de gestion, un message de réponse de chaque terminal une fois que chaque terminal a exécuté l'instruction opérationnelle.

2. Procédé selon la revendication 1, dans lequel l'attribution (103), par le serveur de gestion, d'un paramètre de groupe au terminal en fonction des informations de terminal, consiste à :
attribuer (203), par le serveur de gestion, le paramètre de groupe au terminal en fonction des informations de terminal et d'une règle de groupe prédéfinie, dans lequel
la règle de groupe comprend l'un quelconque des éléments suivants : une classe de produit, des informations de localisation de dispositif, un numéro de série, une version de matériel, une version de logiciel et un identifiant de vendeur de dispositif.

3. Procédé selon l'une quelconque des revendications 1 ou 2, dans lequel, après l'attribution (103), par le serveur de gestion, d'un paramètre de groupe au terminal en fonction des informations de terminal, le procédé consiste en outre à :
envoyer, par le serveur de gestion, un message de définition de paramètre comportant le paramètre de groupe au terminal ; ou
envoyer, par le serveur de gestion, au serveur XMPP, un message d'invite comportant le paramètre de groupe et un identifiant du dispositif de terminal, de sorte que le serveur XMPP envoie le paramètre de groupe au terminal.

4. Procédé de traitement de communication consistant à :
envoyer (201), par un terminal, des informations de terminal à un serveur de gestion ; recevoir, par le terminal, un paramètre de groupe qui est attribué par le serveur de gestion au terminal en fonction des informations de terminal ;
envoyer (208), par le terminal, un message comportant le paramètre de groupe à un serveur de messagerie extensible et de protocole de présence XMPP afin de rejoindre un groupe de terminaux correspondant à un identifiant de groupe compris dans le paramètre de groupe ; et
recevoir (210), par le terminal, un second message de communication qui est envoyé par le serveur XMPP en fonction d'un premier message de communication comportant l'identifiant de groupe correspondant au groupe de terminaux, dans lequel le premier message de communication est reçu par le serveur XMPP depuis le serveur de gestion ;
**caractérisé en ce que** le procédé consiste en outre à :
après la réception (210), par le terminal, d'un second message de communication qui est envoyé par le serveur XMPP en fonction d'un premier message de communication comportant l'identifiant de groupe correspondant au groupe de terminaux, le procédé consiste en outre à :
si le second message de communication comporte une requête de connexion, établir, par le terminal, une session de gestion avec le serveur de gestion en fonction du second message de communication ; ou
si le second message de communication comporte une instruction opérationnelle, exécuter, par le terminal, l'instruction opérationnelle dans le second message de communication et, après l'exécution de l'instruction opérationnelle, envoyer un message de réponse au serveur de gestion.

5. Procédé selon la revendication 4, dans lequel la réception, par le terminal, d'un paramètre de groupe qui est attribué par le serveur de gestion au terminal en fonction des informations de terminal, consiste à :
recevoir (205), par le terminal, un message de définition de paramètre qui est envoyé par le serveur de gestion et comporte le paramètre de groupe, dans lequel le paramètre de groupe est attribué par le serveur de gestion au terminal en fonction des informations de terminal, ou
recevoir, par le terminal, un message d'invite qui est envoyé par le serveur XMPP et comporte le paramètre de groupe, dans lequel le paramètre de groupe est attribué par le serveur de gestion au terminal en fonction des informations de terminal et envoyé au serveur XMPP.

6. Procédé selon la revendication 4 ou 5, dans lequel :
l'identifiant de groupe est utilisé uniquement pour identifier le groupe de terminaux ; et
le paramètre de groupe comprend en outre l'un quelconque des éléments suivants : un second mot de passe de groupe, un nom d'utilisateur de groupe, un nom d'utilisateur de connexion de groupe et un mot de passe de connexion de groupe.

7. Serveur de gestion (800) comprenant :
un module de réception d'informations (81) conçu pour recevoir des informations de terminal envoyées par un terminal ;
un module d'attribution de paramètre (83) conçu pour attribuer un paramètre de groupe à un terminal en fonction des informations de terminal reçues par le module de réception d'informations (81) de sorte que le terminal rejoigne, en envoyant un message comportant le paramètre de groupe à un serveur de messagerie extensible et de protocole de présence XMPP, un groupe de terminaux correspondant à un identifiant de groupe, dans lequel le paramètre de groupe comprend l'identifiant de groupe ; **caractérisé par**
un premier module d'envoi de message (85) conçu pour envoyer, au serveur XMPP, un premier message de communication comportant l'identifiant de groupe correspondant au groupe de terminaux, de sorte que le serveur XMPP envoie, en fonction du premier message de communication, un second message de communication à chaque terminal dans le groupe de terminaux ;
un premier module d'établissement de session (82) conçu pour : après que le premier module d'envoi de message a envoyé le premier message de communication, si le premier message de communication comprend une requête de connexion, recevoir une requête d'établissement de session de gestion qui est envoyée par chaque terminal en fonction du second message de communication, et établir une session de gestion avec chaque terminal ; et/ou
un module de réception de réponse (84) conçu pour : après que le premier module d'envoi de message a envoyé le premier message de communication, si le premier message de communication comprend une instruction opérationnelle, recevoir un message de réponse de chaque terminal une fois que chaque terminal a exécuté l'instruction opérationnelle.

8. Terminal (700) comprenant :
un module d'envoi d'informations (71) conçu pour envoyer des informations de terminal à un serveur de gestion ;
un module de réception de paramètre (73) conçu pour recevoir un paramètre de groupe qui est attribué au terminal par le serveur de gestion en fonction des informations de terminal envoyées par le module d'envoi d'informations, et envoyer le paramètre de groupe à un second module d'envoi de paramètres (75) ;
le second module d'envoi de paramètres (75), conçu pour envoyer, à un serveur de messagerie extensible et de protocole de présence XMPP, un message comportant le paramètre de groupe reçu par le module de réception de paramètre afin de rejoindre un groupe de terminaux correspondant à un identifiant de groupe compris dans le paramètre de groupe ; **caractérisé en ce qu'**il comprend en outre :
un premier module de réception de message (77), conçu pour recevoir un second message de communication envoyé par le serveur XMPP en fonction d'un premier message de communication comportant l'identifiant de groupe correspondant au groupe de terminaux, dans lequel le premier message de communication est reçu par le serveur XMPP depuis le serveur de gestion ;
un second module d'établissement de session (79) conçu pour : après que le premier module de réception de message a reçu le second message de communication qui est envoyé par le serveur XMPP en fonction du premier message de communication comportant l'identifiant de groupe correspondant au groupe de terminaux, si le second message de communication comporte une requête de connexion, établir une session de gestion avec le serveur de gestion en fonction du second message de communication reçu par le premier module de réception de message (77) ; et/ou
un module d'exécution d'instruction (72) conçu pour : après que le premier module de réception de message (77) a reçu le second message de communication qui est envoyé par le serveur XMPP en fonction du premier message de communication comportant l'identifiant de groupe correspondant au groupe de terminaux, si le second message de communication comporte une instruction opérationnelle, exécuter l'instruction opérationnelle dans le second message de communication et, après l'exécution de l'instruction opérationnelle, envoyer un message de réponse au serveur de gestion.

9. Terminal (700) selon la revendication 8, dans lequel le module de réception de paramètre (73) comprend une première unité de réception (731) et/ou une seconde unité de réception (733), dans lequel
la première unité de réception (731) est conçue pour recevoir un message de définition de paramètre qui est envoyé par le serveur de gestion et comporte le paramètre de groupe, dans lequel le paramètre de groupe est attribué par le serveur de gestion au terminal en fonction des informations de terminal envoyées par le module d'envoi d'informations ; et
la seconde unité de réception (733) est conçue pour recevoir un message d'invite qui est envoyé par le serveur XMPP et comporte le paramètre de groupe, dans lequel le paramètre de groupe est attribué par le serveur de gestion au terminal en fonction des informations de terminal et envoyé au serveur XMPP.

10. Terminal (700) selon la revendication 8 ou 9, dans lequel :
l'identifiant de groupe est utilisé uniquement pour identifier le groupe de terminaux ; et
le paramètre de groupe comprend en outre l'un quelconque des éléments suivants : un second mot de passe de groupe, un nom d'utilisateur de groupe, un nom d'utilisateur de connexion de groupe et un mot de passe de connexion de groupe.
